# EUROPÄISCHE PATENTSCHRIFT

(11) **EP 0 603 561 B1**
(45) Veröffentlichungstag und Bekanntmachung des Hinweises auf die Patenterteilung: **05.08.1998**
(21) Anmeldenummer: 93118850.2
(22) Anmeldetag: 24.11.1993
(51) Int. Cl.: C08F 283/12, C09D 151/08, B08B 17/00

(54) **Polysiloxanhaltige Bindemittel, deren Herstellung, diese enthaltende Überzugsmittel und deren Verwendung**
Binders containing polysiloxane, their preparation, coating compositions containing them and their use
Liants à base de polysiloxane, leur fabrication, compositions de revêtement contenant ceux-ci et leur application

(30) Priorität: 28.11.1992 DE 4240108
(43) Veröffentlichungstag der Anmeldung: 29.06.1994
(73) Patentinhaber: Herberts Gesellschaft mit beschränkter Haftung, 42285 Wuppertal (DE)
(72) Erfinder: Brandt, Lutz, D-45257 Essen (DE); Flosbach, Carmen, Dr., D-42115 Wuppertal (DE); Kalus, Reinhardt, D-53562 St. Katharinen (DE); Schubert, Walter, Dr., D-42349 Wuppertal (DE)
(74) Vertreter: Türk, Gille, Hrabal, Leifert

(56) Entgegenhaltungen:
- EP-A- 0 191 237
- EP-A- 0 278 259
- EP-A- 0 588 560
- FR-A- 2 023 437
- FR-A- 2 072 178

## Beschreibung

Die Erfindung betrifft polysiloxanhaltige Bindemittel, die zur Bereitung von Überzugsmitteln geeignet sind. Derartige Überzugsmittel sind besonders geeignet zur Herstellung von schmutzabweisenden Überzügen. Sie können beispielsweise zur Herstellung von Antigraffiti-Überzügen verwendet werden.

In den letzten Jahren wird die Öffentlichkeit immer wieder mit der Problematik unerwünschter durch Sprühauftrag erstellter Graffiti konfrontiert, die häufig insbesondere öffentliche Gebäude und Verkehrsmittel verunzieren. Ihre Beseitigung kann in den meisten Fällen nicht durch einfaches Abwaschen erfolgen; meist ist ein neues Streichen der mit Graffiti versehenen Wände unvermeidlich. Dies erfordert einen hohen Arbeits- und Kostenaufwand.

Es wurde versucht Schutzüberzüge auf der Basis sogenannter Antigraffiti-Lacke zu erstellen, wobei diese Lacke fluorhaltige Polymere enthalten, wie beispielsweise in den US-A-4 929 666 und US-A-5 006 624 beschrieben. Diese Lacke führen zu Überzügen mit einer geringen Oberflächenspannung, wodurch sie schmutzabweisende Eigenschaften haben. Beispielsweise ist es bekannt, daß fluorhaltige Polymere aufgrund der besonders niedrigen kritischen Oberflächenspannung nicht nur von Wasser, sondern auch von Ölen und Fetten schlecht benetzt werden (H.G. Elias, "Makromoleküle, Band 1: Struktur, Synthese, Eigenschaften", Seite 805, Hüthig & Zeichen Wepf Verlag, Basel, 5. Auflage 1990).

Auch Polysiloxanverbindungen ergeben eine Verringerung der Oberflächenspannung. In der DE-A-26 10 372 werden Lösungspolymerisate beschrieben, die in einem Gemisch aus organischen Lösemitteln und Alkylwasserstoffpolysiloxanen hergestellt werden. Derartige Lösungspolymerisate werden zum Imprägnieren von Textilien eingesetzt.

In der EP-A-0 588 560 (nachveröffentlicht) werden Überzugsmassen beschrieben, die ein Polysiloxan mit 3 bis 12 Hydroxylgruppen pro Molekül enthalten, das im Gemisch mit einem Methacrylpolymeren vorliegt. Die EP-A-0 191 237 beschreibt Überzugsmassen, die ein siliziumorganisches Polymer enthalten. Dieses wird durch Polymerisation eines Blockcopolymer-Präaddukts hergestellt. Das Präaddukt weist mindestens eine olefinische Endgruppe auf, die mit ungesättigten organischen Monomeren polymerisiert wird.

In der US-A-5 077 350 werden Pulverlacke beschrieben, die ein Polymer enthalten, das hergestellt wird durch Copolymerisation von (Meth)acrylmonomeren mit Epoxyfunktionen in Gegenwart von Silanolen, die mindestens zwei Si-OH-Funktionen enthalten. Aufgrund der hohen Reaktivität der eingesetzten Silanole ist nur die Copolymerisation mit speziellen Monomeren möglich, da sonst eine Gelierung eintritt.

Aufgabe der Erfindung ist die Bereitstellung von Polymeren bzw. Bindemitteln, die für schmutzabweisende Beschichtungen geeignet sind, die zu keinen Toxizitätsproblemen führen und die ihre schmutzabweisende Wirkung über einen langen Zeitraum von z.B. mehreren Jahren beibehalten.

Es hat sich gezeigt, daß diese Aufgabe gelöst werden kann durch die Bereitstellung von Überzugsmitteln, die als Bindemittel oder Bindemittelkomponente ein oder mehrere Reaktionsprodukte enthalten, die durch Polymerisation radikalisch polymerisierbarer Monomerer in Anwesenheit von funktionelle Gruppen aufweisenden Polysiloxanen erhalten werden, wobei diese Polysiloxane frei von -Si-OH und -Si-OR' (R' = Alkyl) sind.

Einen Gegenstand der Erfindung bilden daher für Überzugsmittel geeignete polysiloxanhaltige Bindemittel, die erhältlich sind durch radikalisch initiierte Polymerisation von
- 97 bis 60 Gew.-%: eines oder mehrerer (Meth)acrylmonomerer und gegebenenfalls zusätzlich eines oder mehrerer davon unterschiedlicher, radikalisch polymerisierbarer Monomerer, in Gegenwart von
- 3 bis 40 Gew.-%: eines oder mehrerer α,ω-hydroxy-, carboxy- und/oder epoxyfunktioneller Polysiloxane, der allgemeinen Formel (I) 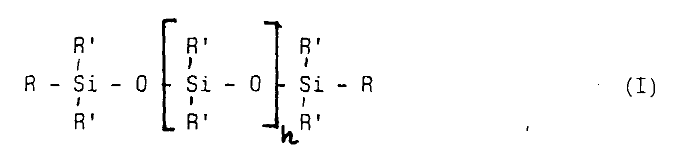
worin die Reste R' gleich oder verschieden sein können und Alkylreste mit 1 bis 6 Kohlenstoffatomen bedeuten und worin die Reste R gleich oder verschieden sein können und

- Alk - OH

- Alk - (OAlk)ₚ- OH

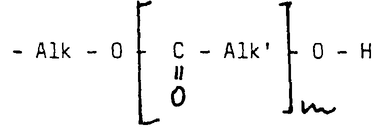

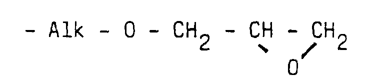

oder 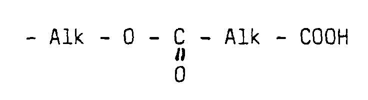 bedeuten,
worin Alk und Alk' Alkylengruppen mit 1 bis 6 Kohlenstoffatomen sind und mehrere in einem Molekül enthaltene Alkylengruppen gleich oder verschieden sein können,
n = 8 bis 40,
m = 2 bis 30 und
p = 1 bis 20.
wobei sich die Gew.-% auf die Summe der Festkörpergewichte der eingesetzten Monomeren und Polysiloxane beziehen.

Die so erhaltenen polysiloxanhaltigen Bindemittel sind zur Bereitung lösemittelhaltiger und/oder wasserhaltiger Überzugsmittel geeignet, die zur Herstellung schmutzabweisender Überzüge geeignet sind und die ebenfalls einen Gegenstand der Erfindung bilden.
Die erfindungsgemäßen Überzugsmittel können neben den erfindungsgemäßen Bindemitteln einen oder mehrere Vernetzer, ein oder mehrere organische Lösemittel und/oder Wasser, sowie weitere lackübliche Zusätze und Hilfsstoffe enthalten. Sie können außer den erfindungsgemäßen Bindemitteln auf Polysiloxanbasis auch ein oder mehrere weitere filmbildende Bindemittel enthalten, die keine Vernetzer für die erfindungsgemäßen Bindemittel auf Polysiloxanbasis sind.
Zur Herstellung der erfindungsgemäßen Bindemittel auf Polysiloxanbasis können alpha,omega-funktionelle Polysiloxane eingesetzt werden. Derartige Polysiloxane weisen in der alpha- und der omega-Stellung Hydroxy-, Carboxy- und/oder Epoxyfunktionen auf. Sie enthalten keine direkt an Siliciumatome gebundene Hydroxyl- oder Alkoxygruppen.
Die erfindungsgemäß eingesetzten Polysiloxane sind problemlos herstellbar. Eine Möglichkeit ist, die entsprechenden Alkylhalogensilane aus SiCl₄, Kieselsäuretetraethylester oder auch elementaren Si in an sich bekannter Weise, zu synthetisieren und anschließend zu den entsprechenden Silikolen zu hydrolisieren. Durch Erwärmen, gegebenenfalls unter Säurezusatz, können diese Silikole dann zu Siloxanen kondensiert werden, (siehe z.B. H. Remy, Lehrbuch der anorganischen Chemie, Bd. 1, 13. Auflage, Akademische Verlagsgesellschaft Geest und Parzig, K.G. Leipzig 1970). Die entstandenen Siloxane sind alpha,omega-hydroxyalkylfunktionell. Durch geeignete Umesterung dieser entständigen OH-Gruppen mit cyclischen Estern, wie z.B. epsilon-Caprolacton, lassen sich diese OH-Gruppen durch ringöffnende Addition kettenverlängern. Durch Umesterung der OH-Funktionen mit Anhydriden, wie z.B. Bernsteinsäureanhydrid, lassen sich alpha,omega-COOH-funktionalisierte Siloxane herstellen, durch Reaktion der OH-Gruppen mit z.B. Epichlorhydrin, alpha,omega-funktionalisierte Glycidylsiloxane. Derartige Siloxane, wie sie erfindungsgemäß eingesetzt werden, sind beispielsweise auch in der DE-A-40 17 075 beschrieben. Sie sind auch im Handel erhältlich, beispielsweise als Handelsprodukte der Firmen Th. Goldschmid AG; EFKA Chemicals B.V.; Dow Corning Corp. Europe Brüssel; Wacker Chemie, Burghausen; Bayer AG.

Die zur Herstellung der erfindungsgemäßen Bindemittel verwendeten Polysiloxane entsprechen der vorstehend angegebenen allgemeinen Formel (I). Gemäß einer bevorzugten Ausführungsform sind sämtliche Reste R' der allgemeinen Formel (I) Methylreste. Bei den Alkylenresten Alk und Alk' handelt es sich um solche mit 1 bis 6 Kohlenstoffatomen Bevorzugt sind für die Reste Alk 2 bis 3 Kohlenstoffatome; es handelt sich insbesondere um Ethylen- und Propylengruppen Beim Rest Alk' handelt es sich insbesondere um Reste mit 4 bis 6 Kohlenstoffatomen, besonders bevorzugt 5 Kohlenstoffatomen.

Besonders bevorzugte Definitionen der Reste R, die gleich oder verschieden sein können, sind:

-(CH₂)₃ - OH,

- (CH₂)₃ - (O CH₂ CH₂)₁₀ - OH

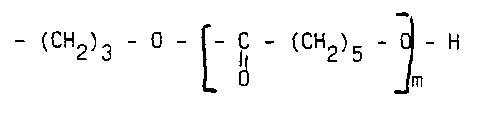

mit m = 2 bis 30, 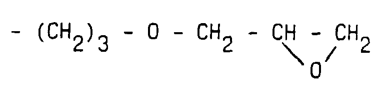 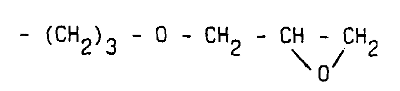 oder 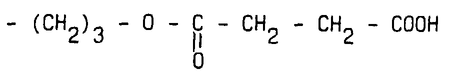 bedeuten, und
n = 8 bis 40.

Die zur Herstellung der erfindungsgemäßen Bindemittel eingesetzten Polysiloxane weisen bevorzugt ein Zahlenmittel der Molmasse (Mn) von 600 bis 9000 auf. Die durch Polymerisation der erfindungsgemäß eingesetzten Monomeren in Anwesenheit der Polysiloxane erhaltenen Polymeren (polysiloxanhaltige Bindemittel) haben bevorzugt ein Zahlenmittel der Molmasse (Mn) von 1000 bis 20000.

### Beispiele für zur Pfropfpolymerisation geeignete Monomere:

Zur Polymerisation in Anwesenheit der Polysiloxane können sämtliche bekannten monofunktionellen (Meth)acrylmonomeren, gegebenenfalls zusammen mit weiteren davon unterschiedlichen, radikalisch polymerisierbaren Monomeren verwendet werden. Der Anteil der zusätzlichen Monomeren kann z.B. 0 bis 50 Gew.-%, bevorzugt 0 bis 40 Gew.-%, bezogen auf das Gewicht der (Meth)acrylmonomeren betragen.

Der Ausdruck (Meth)acryl steht hier synonym für Acryl und/oder Methacryl, die substituiert sein können.

Beispiele für (Meth)acrylmonomere sind (Meth)acrylsäureester, wie Alkyl(meth)acrylate, die auch weitere funktionelle Gruppen tragen können, wie Hydroxylgruppen, Aminogruppen, insbesondere tert.-Aminogruppen, Glycidylfunktionen oder carboxyfunktionalisierte Monomere.

Beispiele hierfür sind langkettige, verzweigte oder unverzweigte ungesättigte Monomere, wie Alkyl(meth)acrylate mit C₈ - C₁₈-Ketten im Alkylteil, z.B. Ethylhexyl(meth)acrylat, Octyl(meth)acrylat, 3,5,5-Trimethylhexyl (meth)acrylat, Decyl(meth)acrylat, Dodecyl(meth)acrylat, Hexadecyl(meth)acrylat, Octadecyl(meth)acrylat, Laurylacrylat-1214, Isobornyl(meth)acrylat, 4-Tertiärbutylcyclohexylmethacrylat. Weitere Beispiele sind kurz- oder mittelkettige, verzweigte oder unverzweigte ungesättigte Monomere, wie Alkyl(meth)acrylate mit C₁ - C₇-Ketten im Alkylteil, z.B. Methyl (meth)acrylat, Ethyl(meth)acrylat, Propyl(meth)acrylat, Isopropyl(meth)acrylat, Butyl(meth)acrylat, Isobutyl(meth)acrylat, Tertiärbutyl(meth)acrylat, Pentyl(meth)acrylat, Hexyl(meth)acrylat, Cyclohexyl(meth)acrylat.

Die verwendeten (Meth)acrylmonomere können beispielsweise primäre oder sekundäre Hydroxyfunktionen tragen. Beispiele für Monomere mit primären Hydroxyfunktionen sind Hydroxyalkylester der Acrylsäure und/oder Methacrylsäure mit einer primären OH-Gruppe und einem C₂ - C₃-Hydroxyalkylrest mit Hydroxyethyl(meth)acrylat, sowie Hydroxyalkylester der Acrylsäure und/oder Methacrylsäure mit einer primären OH-Gruppe und einem C₇ - C₁₈-Hydroxyalkylrest wie z.B. Butandiolmonoacrylat, Hydroxyhexylacrylat, Hydroxyoctylacrylat und die entsprechenden Methacrylate und Umsetzungsprodukte von Hydroxyethyl(meth)acrylat mit Caprolacton.

Beispiele für Monomere mit sekundären OH-Funktionen sind:
Hydroxypropyl(meth)acrylat, Addukte aus Glycidyl(meth)acrylat und gesättigte kurzkettige Fettsäuren mit C₁ - C₃ Alkylresten, z.B. Essigsäure oder Propionsäure, sowie Addukte aus Cardura E (Glycidylester der Versaticsäure) mit ungesättigten COOH-funktionellen Verbindungen wie z.B. Acryl- bzw. Methacrylsäure, Maleinsäure, Crotonsäure, Addukte aus Cardura E mit ungesättigten Anhydriden wie z.B. Maleinsäureanhydrid, Umsetzungsprodukte aus Glycidyl(meth)acrylat mit gesättigten verzweigten oder unverzweigten Fettsäuren mit C₄ - C₂₀-Alkylresten, z.B. Butansäure, Capronsäure, Laurinsäure, Palmitinsäure, Stearinsäure, Arachidonsäure.

Beispiele für carboxyfunktionalisierte Monomere sind Acrylsäure, Methacrylsäure und Crotonsäure.

Ebenfalls möglich ist es, glycidylfunktionalisierte Monomere einzusetzen. Beispiele für solche Monomere sind Glycidyl(meth)acrylat, 1,2-Epoxybutylacrylat oder 2,3-Epoxycyclopentylacrylat.

Weitere copolymerisierbare Glycidylmonomere sind z.B. (Meth)allylglycidylether oder 3,4-Epoxy-1-vinylcyclohexan.

Ebenfalls möglich ist beispielsweise die Verwendung von (Meth)acrylmonomeren mit endständigen tert.-Aminogruppen. Beispiele für solche Monomere sind tert.-Aminomethylmethacrylat oder tert.-Aminopropylmethacrylat. Im Falle der Verwendung derartiger Monomerer sollte auf die gleichzeitige Verwendung von glycidylfunktionalisierten Monomeren verzichtet werden, da sonst eine Gelieren des Polymeren nicht auszuschließen ist.

Radikalisch polymerisierbare Monomere, die mit den (Meth)acrylmonomeren verwendet werden können, sind beispielsweise vinylaromatische Monomere, wie Styrol und Styrolderivate, wie Vinyltoluole, Chlorstyrole, o-, m- oder p-Methylstyrol, 2,5-Dimethylstyrol, p-Methoxystyrol, p-tert.-Butylstyrol, p-Diemthylaminostyrol, p-Acetamidostyrol und m-Vinylphenol. Bevorzugt werden Vinyltoluole sowie insbesondere Styrol eingesetzt.

Beispiele für verwendbare carboxylfunktionalisierte Monomere sind Crotonsäure, ungesättigte Anhydride wie Maleinsäureanhydrid, sowie Halbester von Maleinsäureanhydrid durch Anlagerung von gesättigten aliphatischen Alkoholen wie z.B. Ethanol, Propanol, Butanol und/oder Isobutanol.

Beispiele für weitere, geeignete ethylenisch ungesättigte Monomere sind die Alkylester der Malein-, Fumar-, Tetrahydrophthal-, Croton-, Isocroton-, Vinylessig- und Itaconsäure, wie z.B. entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-Dodecyl-, Hexadecyl-, Octadecyl- und Octadecenylester.

Weiterhin können auch kleine Anteile Monomere mit mindestens zwei polymerisierbaren, olefinisch ungesättigten Doppelbindungen eingesetzt werden. Bevorzugt liegt der Anteil dieser Monomeren unter 5 Gew.-%, bezogen auf das Gesamtgewicht der Monomeren.

Beispiele für derartige Verbindungen sind Hexandioldeacrylat, Hexandioldimethacrylat, Ethylenglykoldiacrylat, Ethylenglykoldimethacrylat, Butandioldiacrylat, Butandioldimethacrylat, Hexamethylenbismethacrylamid, Trimethylolpropantriacrylat, Trimethylolpropantrimethacrylat und ähnliche Verbindungen.

Bei der Synthese der erfindungsgemäßen Bindemittel werden die radikalisch polymerisierbaren Monomeren in Anwesenheit eines oder mehrerer Polysiloxane zur Umsetzung gebracht. Wenn es sich bei den Polysiloxanen um flüssige Materialien handelt, so kann auf den Zusatz von Lösemitteln verzichtet werden. Es ist jedoch möglich in Anwesenheit von Lösemitteln zu arbeiten, so daß ein flüssiges Reaktionsmedium erzielt wird. Es ist günstig, die Lösemittelmenge so gering wie möglich zu halten. Beispiele für verwendbare Lösemittel sind lackübliche Lösemittel, wie aromatische Kohlenwasserstoffe oder Ester, z.B. Xylol oder Butylacetat.

Die Polysiloxanmenge wird so gewählt, daß sie 3 bis 40 Gew.-%, bezogen auf den Gesamtfeststoffgehalt des fertigen Bindemittels beträgt.

Gemäß einer Ausführungsform des erfindungsgemäßen Verfahrens können die Polysiloxane gegebenenfalls mit wenig Lösemittel vorgelegt werden. Im allgemeinen wird die Gesamtmenge des einzusetzenden Polysiloxans vorgelegt. Zur Polymerisation der Monomeren kann diese Polysiloxanmatrix erwärmt werden, beispielsweise auf Temperaturen in der Größenordnung von 100 bis 150°C, z.B. 140°C.

In diese Polysiloxanmatrix können dann die Monomeren eingebracht werden. Dies kann beispielsweise durch Zutropfen erfolgen, beispielsweise über einen Zeitraum von 3 bis 5 Stunden.

Die Monomeren oder das eingesetzte Monomerengemisch können Initiatoren enthalten. Sofern Initiatoren nicht in der Monomerenmischung enthalten sind, können sie zur Monomerenmischung gegebenenfalls geringfügig zeitversetzt zugesetzt oder separat zudosiert werden. Anschließend kann noch über einen längeren Zeitraum, z.B. während mehrerer Stunden nachpolymerisiert werden. Es ist dann möglich mit einem üblichen Lacklösemittel auf einen gewünschten Feststoffgehalt, beispielsweise in der Größenordnung von 30 bis 60 Gew.-%, beispielsweise 50 Gew.-% einzustellen.

Die Herstellung der Bindemittel erfolgt beispielsweise durch radikalische Copolymerisation. Die Monomermenge wird dabei so abgestimmt, daß die gewünschten Spezifikationen bezüglich Molmasse, OH-Gruppen-Verhältnis, OH-Zahl und Säurezahl erzielt werden.

Die Herstellung erfolgt beispielsweise als radikalische Lösungspolymerisation in Anwesenheit eines Radikalinitiators, wie sie dem Fachmann bekannt ist. Beispiele für Radikalinitiatoren sind Dialkylperoxide, wie Di-tert.-Butylperoxid, Di-cumylperoxid; Diacylperoxid, wie Di-benzoylperoxid, Dilauroylperoxid; Hydroperoxide, wie Cumolhydroperoxid, tert.-Butylhydroperoxid; Perester, wie tert.-Butyl-perbenzoat, tert.-Butylperpivalat, tert.-Butyl-per-3,5,5-trimethylhexanoat, tert.-Butyl-per-2-ethylhexanoat; Peroxiddicarbonate, wie Di-2-ethylhexyl-peroxydicarbonat, Dicyclohexylperoxydicarbonat; Perketale, wie 1,1-Bis-(tert.-Butylperoxy) 3,5,5-trimethylcyclohexan, 1,1-Bis-(tert.-Butylperoxy)cyclohexan; Ketonperoxide, wie Cyclohexanonperoxid, Methylisobutylketonperoxid und Azo-Verbindungen, wie 2,2'-Azo-bis(2,4-dimethyl-valeronitril), 2,2'-Azo-bis(2Methylbutyronitril), 1,1'-Azo-bis-cyclohexancarbonitril, Azo-bis-isobutyro-nitril, C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt.

Sofern eine wäßrige Emulsion erstellt werden soll, wird (statt der Festkörpereinstellung durch Zusatz üblicher Lacklösemittel) das bei der Herstellung verwendet Lösemittel entfernt. Dies kann beispielsweise destillativ, gegebenenfalls unter Vakuum erfolgen. Das erhaltene Harzkonzentrat, das einen hohen Festkörpergehalt, von beispielsweise 90 Gew.-% hat, kann dann, sofern saure Gruppierungen im Harz enthalten sind, mit einer üblichen Base, z.B. Ammoniak oder einem organischem Amin, z.B. Triethylamin, neutralisiert werden. Das erhaltene neutralisierte Harzkonzentrat kann in Wasser emulgiert werden. Dies kann beispielsweise unter starkem Rühren und erforderlichenfalls unter Erwärmen, beispielsweise auf Temperaturen von 30 bis 80°C, z.B. 50°C, erfolgen.

Es ist auch möglich bei der Herstellung der Harze Monomere mit basischen Gruppierungen, z.B. solche, die tertiäre Amine enthalten, mit einzupolymerisieren. Das so hergestellte, basische Gruppen enthaltende Harz, kann dann mit Säuren, z.B. anorganischen oder organischen Säuren, wie Ameisensäure, Essigsäure, neutralisiert und anschließend in Wasser einemulgiert werden.

Wenn das Harz keine sauren, basischen oder ionischen Gruppen enthält, kann es mit Hilfe eines üblichen, nicht-ionischen Emulgators emulgiert werden. Dies geschieht z.B. durch Homogenisieren des Harzkonzentrats und des nicht-ionischen Emulgators, gegebenenfalls unter Erwärmen, beispielsweise auf Temperaturen von 30 bis 80°C, z.B. 60°C. Ein derartiges Gemisch kann in einer üblichen Homogenisierungseinrichtung emulgiert werden. Beispiele hierfür sind Rotor/Stator-Homogenisatoren, die mit Drehzahlen von beispielsweise 8000 bis 10000 Umdrehungen pro Minute arbeiten. Die Emulgatoren werden beispielsweise in Mengen von 3 bis 30 Gew.-%, bezogen auf das Harz konzentrat, eingesetzt.

Es wird angenommen, daß durch die erfindungsgemäße Verfahrensweise eine Fixierung der Polysiloxanharze in der durch Polymerisation der Monomeren gebildeten Bindemittelmatrix erfolgt. Ohne hier an eine spezielle Theorie gebunden zu sein, wird angenommen, daß zum einen bei der Polymerisation der Monomeren in Gegenwart des Polysiloxanharzes ein semi-interpenetrierendes Netzwerk entsteht, zum anderen bei der Polymerisation jedoch zumindest auch ein Teil der Monomeren auf die Polysiloxanmatrix aufgepfropft wird. Es wird angenommen, daß hierdurch die günstige Witterungsbeständigkeit von Überzügen erzielt wird, die auf der Basis der erfindungsgemäßen Bindemittel hergestellt werden.

Die erfindungsgemäßen Bindemittel sind besonders zur Herstellung von Überzugsmitteln geeignet. Derartige Überzugsmittel können neben den erfindungsgemäßen Bindemitteln lackübliche Zusätze, insbesondere Vernetzer, enthalten. Die Vernetzer können so gewählt werden, daß sie sowohl die Polysiloxane, die im Bindemittel enthalten sind, wie auch die weiteren Harzanteile chemisch vernetzen. Hierdurch kann eine zusätzliche Einbindung der Polysiloxane in die erhaltenen Überzüge erfolgen.

### Vernetzungsmöglichkeiten in den erfindungsgemäßen Überzugsmitteln:

Bei der Herstellung der erfindungsgemäßen Bindemittel, bleiben die funktionellen Gruppen der eingesetzten Polysiloxane weitgehend erhalten. Es ist daher möglich, Vernetzer je nach der Art der eingesetzten funktionellen Gruppen der Bindemittel zu wählen. Als Beispiele seien folgende Kombinationen von Bindemitteln auf Polysiloxanbasis und Vernetzern angegeben:
1) Hydroxy- und/oder carboxyfunktionalisierte Polysiloxane, in die unter anderem hydroxy- und/oder carboxyfunktionalisierte (Meth)acrylmanomere einpolymerisiert werden, mit Vernetzern auf der Basis von
   1a) Polyisocyanaten, die verkappt sein können, und/oder
   1b) Melaminharzen, oder
   1c) Polyepoxiden, wobei gegebenenfalls mit Säuren oder basischen Katalysatoren katalysiert werden kann.
2) Epoxidfunktionalisierte Polysiloxane, in die unter anderem epoxid- und gegebenenfalls hydroxyfunktionalisierte (Meth)acrylmonomere einpolymerisiert sind, mit Vernetzern auf der Basis von
   2a) Carboxyfunktionalisierten Verbindungen, wobei die Vernetzung gegebenenfalls mit Säuren oder Basen katalysiert werden kann, und gegebenenfalls
   2b) Melaminharzen, oder
   2c) Polyaminen, die gegebenenfalls verkappt sein können.
3) Epoxidfunktionalisierte Polysiloxane, in die unter anderem epoxidfunktionalisierte (Meth)acrylmonomere einpolymerisiert sind, wobei ein Teil der Glycidylfunktionen anschließend mit α,β-ungesättigten Carbonsäuren verestert sind, wodurch ungesättigte Gruppierungen im Harz eingebaut werden, wie es in der DE-A-40 27 259 beschrieben ist, mit Vernetzern auf der Basis von
   3a) Polyaminen, die gegebenenfalls verkappt sein können, oder
   3b) Komponenten mit mehreren C-H-aciden Gruppierungen im Molekül, wobei gegebenenfalls ein basischer Katalysator zugegeben sein kann, oder
   3c) Umesterungsvernetzer mit mehreren umesterungsfähigen Gruppen pro Molekül.

### Beispiele für in den erfindungsgemäßen Überzugsmitteln verwendbare Vernetzer:

Beispiele für Polyisocyanate 1a sind Diisocyanate, wie lackübliche aliphatische, cycloaliphatische und aromatische Diisocyanate, z.B. 2,4-Toluylendiisocyanat; 2,6-Toluylendiisocyanat; 4,4-Diphenylmethandiisocyanat, Hexamethylendiisocyanat; 3,5,5-Trimethyl-1-isocyanat-3-isocyanatomethylcyclohexan; m-Xylylendiisocyanat, p-Xylylendiisocyanat; Tetramethyldiisocyanat, Isophorondiisocyanat oder Cyclohexan-1,4-diisocyanat.

Die Polyisocyanat können zu Präpolymeren mit höherer Molmasse verknüpft sein. Zu nennen sind hier beispielsweise Addukte aus Toluylendiisocyanat und Trimethylolpropan, ein aus 3 Molekülen Hexamethyldiisocyanat gebildetes Biuret, sowie die Trimeren des Hexamethylendiisocyanats und die Trimeren von Isophorondiisocyanat.

Die Isocyanatgruppierungen der eingesetzten Polyisocyanate sind gegebenenfalls vollständig verkappt. Es können übliche Verkappungsmittel verwendet werden, z.B. Malonsäuredimethylester, Malonsäurediethylester, Acetessigester, Caprolacton, 1,2-Propandiol und/oder Butanonoxim sowie die weiteren, dem Fachmann geläufigen Verkappungsmittel.

Beispiele für Melaminharze 1b sind als Vernetzer übliche Harze, wie z.B. Methyl-veretherte Melamine, wie die Handelsprodukte Cymel 325, Cymel 327, Cymel 350 und Cymel 370, Maprenal MF 927.

Weitere Beispiele für verwendbare Melaminharze 1b sind butanol- oder isobutanolveretherte Melamine wie z.B. die Handelsprodukte Setamin US 138 oder Maprenal MF 610; mischveretherte Melamine, die sowohl butanol- als auch methanolverethert sind, wie z.B. Cymel 254, sowie Hexamethyloxymethylmelamin (HMM-Melamine) wie z.B. Cymel 301 oder Cymel 303, wobei letztere zur Vernetzung einen externen Säurekatalysator wie z.B. p-Toluolsulfonsäure benötigen können.

Die erfindungsgemäßen Bindemittel, wie sie unter 1) beschrieben sind, können mit den unverkappten Polyisocyanaten in einem weiteren Temperaturbereich z.B. zwischen 20°C und 180°C vernetzt werden, wobei der Bereich zwischen 20°C und 80°C bevorzugt ist.

Im Falle der Verwendung verkappter Polyisocyanate und/oder Melaminharze sind Einbrenntemperaturen zwischen 80°C und 180°C bevorzugt.

Beispiele für Polyepoxide 1c, die mit Säuregruppen enthaltendem, z.B. COOH-gruppenhaltigem Bindemittel 1) vernetzen können, sind di- oder polyfunktionelle Epoxyverbindungen, die hergestellt werden unter Verwendung von beispielsweise di- oder polyfunktionellen Epoxyverbindungen, wie Diglycidyl- oder Polyglycidylether von (cyclo)aliphatischen oder aromatischen Hydroxyverbindungen wie Ethylenglykol, Glycerol, 1,2- und 1,4-Cyclohexandiol, Bisphenole wie Bisphenol A, Polyglycidylether von Phenolformaldehyd-Novolaken, Polymere ethylenisch ungesättigter Gruppen, die Epoxy-Gruppen enthalten, wie Glycidyl(meth)acrylat, N-Glycidyl(meth)acrylamid, und/oder Allylglycidylether, wahlweise copolymerisiert mit verschiedenen anderen ethylenisch ungesättigten Monomeren, Glycidylether von Fettsäuren mit 6 - 24 C-Atomen, epoxidierte Polyalkadiene, wie epoxidierte Polybutadien, Hydantoin-Epoxy-Harze, glycidylgruppenhaltige Harze, wie Polyester oder Polyurethane, die eine oder mehrere Glycidylgruppen pro Molekül enthalten, und Gemische der genannten Harze und Verbindungen.

Gegebenenfalls kann die Vernetzung mit Katalysatoren, die beispielsweise in einer Menge zwischen 0,1 % und 10 %, bezogen auf den Gesamtfestharzgehalt eingesetzt werden, zusätzlich katalysiert werden.

Es sind dies z.B. Phosphoniumsalze wie Benzyltriphenylphoniumacetat, chlorid, -bromid oder -jodid, oder z.B. Ammoniumverbindungen wie z.B. Tetraethylammoniumchlorid oder -fluorid.

Beispiele für carboxyfunktionalisierte Verbindungen 2a, die die epoxidfunktionalisierten Bindemittel unter 2) vernetzen können, sind carboxyfunktionalisierte Poly(meth)acrylcopolymere und/oder ein oder mehrere carboxyfunktionalisierte Polyester. Solche carboxyfunktionalisierte Poly(meth)acrylcopolymeren weisen bevorzugt ein Zahlenmittel des Molgewichts (Mn) von 1000 bis 10000 g/mol auf. Die entsprechend einsetzbaren carboxyfunktionalisierten Polyester weisen bevorzugt ein errechnetes Molgewicht von 500 bis 2000 g/mol auf. Die Säurezahl dieser Ausgangsmaterialien liegt bei 15 bis 200 mg KOH/g, bevorzugt bei 30 bis 140 mg KOH/g und besonders bevorzugt bei 60 bis 120 mg KOH/g.

Bei der Herstellung der carboxylgruppenhaltigen Poly(meth)acrylcopolymeren bzw. Polyester können die Carboxylgruppen direkt durch Verwendung carboxylgruppenhaltiger Bausteine, beispielsweise beim Aufbau von Polymeren, wie (Meth)acrylcopolymeren, eingeführt werden. Beispiele für hierzu verwendbare geeignete carboxylgruppenhaltige Monomere sind ungesättigte Carbonsäuren, wie z.B. Acryl-, Methacryl-, Itacon-, Croton, Isocroton-, Aconit-, Malein- und Fumarsäure, Halbester der Malein- und Fumarsäure sowie β-Carboxyethylacrylat und Addukte von Hydroxyalkylestern der Acrylsäure und/oder Methacrylsäure mit Carbonsäureanhydriden, wie z.B. der Phthalsäure-mono-2-methacryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung der carboxylgruppenhaltigen (Meth)acrylcopolymere bzw. Polyester ist es aber auch möglich, zunächst ein hydroxy- und gegebenenfalls carboxylgruppenhaltiges Polymer mit einer OH-Zahl von 15 bis 200 mg KOH/g aufzubauen und die Carboxylgruppen ganz oder teilweise in einer zweiten Stufe durch Umsetzen der Hydroxyl- und gegebenenfalls carboxylgruppenhaltigen Polymeren mit Carbonsäureanhydriden einzuführen.

Für die Addition an die hydroxylgruppenhaltigen Polymeren geeignete Carbonsäureanhydride sind die Anhydride von aliphatischen, cycloaliphatischen und aromatischen gesättigten und/oder ungesättigten Di- und Polycarbonsäuren, wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyromellitsäure sowie deren halogenierte oder alkylierte Derivate.

Bevorzugt eingesetzt werden Anhydride der Phthalsäure, Tetrahydro- und Hexahydrophthalsäure sowie 5-Methylhexahydrophthalsäureanhydrid.

Beispiele für geeignete Hydroxyalkylester α,β-ungesättigter Carbonsäuren mit primären Hydroxylgruppen zur Herstellung hydroxyfunktioneller Poly (meth)acrylate sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxyalkylester mit einer sekundären Hydroxylgruppen seien 2-Hydroxypropylacrylat, 2-Hydroxybutylacrylat, 3-Hydroxybutylacrylat und die entsprechenden Methacrylate genannt.

Vorteilhafterweise kann die hydroxylfunktionalisierte Komponente zumindest teilweise ein Umsetzungsprodukt aus einem Mol Hydroxyethylacrylat und/oder Hydroxyethylmethacrylat und durchschnittlich zwei Mol ε-Caprolacton sein.

Als hydroxyfunktionalisierte Komponente kann zumindest teilweise auch ein Umsetzungsprodukt aus Acrylsäure und/oder Methacrylsäure mit dem Glycidylester einer Carbonsäure mit einem tertiären α-Kohlenstoffatom eingesetzt werden. Glycidylester stark verzweigter Monocarbonsäuren sind unter dem Handelsnamen "Cardura" erhältlich. Die Umsetzung der Acrylsäure oder Methacrylsäure mit dem Glycidylester einer Carbonsäure mit einem tertiären α-Kohlenstoff kann vor, während oder nach der Polymerisationsreaktion erfolgen.

Bei der Herstellung der (Meth)acrylcopolymeren können neben den vorstehend genannten Monomeren auch weitere ethylenisch ungesättigte Monomere verwendet werden. Die Auswahl der weiteren ethylenisch ungesättigten Monomeren ist nicht kritisch. Es muß nur darauf geachtet werden, daß der Einbau dieser Monomeren nicht zu unerwünschten Eigenschaften des Copolymerisats führt.

Als weitere ethylenisch ungesättigte Komponente geeignet sind insbesondere Alkylester der Acryl- und Methacrylsäure, wie z.B. Methyl(meth)acrylat; Ethyl(meth)acrylat, Propyl(meth)acrylat, Butyl(meth)acrylat, Isopropyl(meth)acrylat, Isobutyl(meth)acrylat, Pentyl(meth)acrylat, Hexyl (meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat.

Statt der vorstehend genannten Alkylester der Acryl- und Methacrylsäure oder zusammen mit diesen Alkylestern können zur Herstellung von (Meth)acrylcopolymerisaten weitere ethylenisch ungesättigte Monomere eingesetzt werden, wobei sich die Auswahl dieser Monomeren weitgehend nach den gewünschten Eigenschaften der Überzugsmittel in bezug auf Härte, Elastizität, Verträglichkeit und Polarität richtet.

Beispiele für weitere, geeignete ethylenisch ungesättigte Monomere sind die Alkylester der Malein-, Fumar-, Tetrahydrophthal-, Croton-, Isocroton-, Vinylessig- und Itaconsäure, wie z.B. entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-Dodecyl-, Hexadecyl-, Octadecyl- und Octadecenylester.

Weiterhin können auch kleine Anteile Monomere mit mindestens zwei polymerisierbaren, olefinisch ungesättigten Doppelbindungen eingesetzt werden.

Bevorzugt liegt der Anteil dieser Monomeren unter 5 Gew.-%, bezogen auf das Gesamtgewicht der Monomeren.

Beispiele für derartige Verbindungen sind Hexandioldiacrylat, Hexandioldimethacrylat, Ethylenglykoldiacrylat, Ethylenglykoldimethacrylat, Butandioldiacrylat, Butandioldimethacrylat, Hexamethylenbismethacrylamid, Trimethylolpropantriacrylat, Trimethylolpropantrimethacrylat und ähnliche Verbindungen.

Eine weitere geeignete Komponente ist eine monovinylaromatische Verbindung. Vorzugsweise enthält sie 8 bis 10 Kohlenstoffatome je Molekül. Beispiele für geeignete Verbindungen sind Styrol, Vinyltoluole, α-Methylstyrol, Chlorstyrole, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Die carboxylgruppenhaltigen Polyester können nach den üblichen Methoden (vgl. z.B. B. Vollmert, Grundriß der makromolekularen Chemie, E. Vollmert-Verlag Karlsruhe 1982, Band II, Seite 5 ff.) aufgebaut werden aus aliphatischen und/oder cycloaliphatischen Di-, Tri- oder höherwertigen Alkoholen, gegebenenfalls zusammen mit einwertigen Alkoholen und aus aliphatischen, aromatischen und/oder cycloaliphatischen Carbonsäuren sowie höherwertigen Polycarbonsäuren. Beispiele für geeignete Alkohole sind Ethylenglykol, 1,2-Propandiol, 1,3-Propandiol, 2,2-Dimethyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, Glycerin, Trimethylethan, Trimethylolpropan, Pentaerythrit, Veretherungsprodukte von Diolen und Polyolen, z.B. Di- und Triethylenglykol, Polyethylenglykol, Neopentylglykolester von Hydroxypivalinsäure.

Beispiele für geeignete Carbonsäuren sind Adipin-, Azelain, 1,3- und 1,4-Cyclohexandicarbonsäuren, Tetrahydrophthal-, Hexahydrophthal-, Endomethyltetrahydrophthalsäure, Isophthalsäure, o-Phthalsäure, Terephthalsäure bzw. deren Anhydride sowie deren veresterungsfähige Derivate.

Die errechneten Molgewichte der Polyester liegen beispielsweise zwischen 500 und 2000 g/mol.

Die verwendbaren carboxyfunktionellen Poly(meth)acrylcopolymerisate und Polyester können mit einem Lacton "kettenverlängert" werden. Die Lactone (cyclische Ester) lagern sich an Carboxylgruppen an, wobei der Ring geöffnet wird und eine neue endständige Carboxylgruppe entsteht. Ein Beispiel für ein besonders bevorzugtes Lacton ist das epsilon-Caprolacton.

Beispiele für andere Lactone sind gamma-Butyrolacton und Lactone, wie beta-Priolacton, delta-Valerolacton, delta-Butyrolacton, zeta-Enantholacton, eta-Caprylolacton. Derartige Lactone können substituiert sein: Beispiele hierfür sind 6-Methyl-epsilon-caprolacton, 3-Methyl-epsiloncaprolacton, 5-Methyl-epsilon-caprolacton, 5-Phenol-epsilon-caprolacton, 4-Methyl-delta-valerolacton, 3,5-Dimethyl-epsilon-caprolacton, und Mischungen davon.

Die Umsetzung mit dem Lacton kann beispielsweise unmittelbar im Anschluß an die Harzsynthese, das heißt an die Synthese des Poly(meth)acrylpolymerisats und/oder des Polyesters erfolgen. Die Reaktion erfolgt beispielsweise bei erhöhter Temperatur, beispielsweise bei Temperaturen bis zu 100°C. Die Reaktion kann beispielsweise unter Rühren beispielsweise bis zu 10 Stunden durchgeführt werden.

Die Katalysatoren, die eine Vernetzung zwischen den epoxidfunktinalisierten Polysiloxanen 2) und der Komponente 2a) beschleunigen können, sind die bei der Beschreibung der Komponente 1c) beschriebenen.

Die Mengenverhältnisse der Komponenten 2) und 2a) werden bevorzugt so gewählt, daß das Verhältnis der Epoxidgruppen und Carboxygruppen zwischen 1 : 1,5 und 1,5 : 1, bevorzugt 1 : 1,2 und 1,2 : 1 liegt.

Die unter 2b) genannten Melaminharze sind die gleichen, wie sie vorstehend unter 1b) beschrieben werden.

Die Komponente 2c) ist eine Polyaminkomponente mit mindestens zwei funktionellen Gruppen der Formel

R⁴HN-,

worin R⁴ ein Wasserstoffatom oder ein gerader oder verzweigter Alkylrest mit 1 bis 10 Kohlenstoffatomen oder Cycloalkylrest mit 3 bis 8, bevorzugt 5 oder 6 Kohlenstoffatomen sein kann, enthält.

Geeignete Polyamine sind Diamine und Amine mit mehr als zwei Aminogruppen, wobei die Aminogruppen primär und/oder sekundär sein können. Darüberhinaus sind als Polyamine beispielsweise auch Addukte geeignet, die aus Polyaminen mit mindestens zwei primären Aminogruppen und mindestens einer, bevorzugt einer, sekundären Aminogruppen bestehen, mit Epoxyverbindungen, Polyisocyanaten und Acryloylverbindungen. Darüberhinaus sind auch Aminoamide und Addukte aus carboxyfunktionalisierten Acrylaten mit Iminen geeignet, die mindestens zwei Aminogruppen aufweisen.

Beispiele für geeignete Di- und Polyamine sind bespielsweise in den EP-A-0 240 083 und EP-A-0 346 982 beschrieben. Beispiele hierfür sind aliphatische und/oder cycloaliphatische Amine mit 2 - 24 C-Atomen, die 2 - 10 primäre Aminogruppen, bevorzugt 2 - 4 primäre Aminogruppen, und 0 - 4 sekundäre Aminogruppen enthalten.

Repräsentative Beispiele hierfür sind Ethylendiamin, Propylendiamin, butlyendiamin, Pentamethylendiamin, Hexamethylendiamin, 4,7-Dioxa-decan-1,10-diamin, 1,2-Diaminocyclohexan, 1,4-Diaminocyclohexan, Isophorondiamin, Diethylentriamin, Dipropylentriamin, 2,2-Bis-(4-aminocyclohexyl)propan; Polyether-Polyamine, z.B. solche mit dem Handelsnamen Jeffamine oder Jefferson Chemical Company, Bis-(3-aminopropyl)ethylamine, 3-Amino-1-(methylamino)-propan und 3-Amino-1-(cyclohexylamino)propan.

Geeignet sind auch gebräuchliche Polyamine auf der Basis von Addukten von polyfunktionellen Aminkomponenten mit di- oder polyfunktionellen Epoxy-, Verbindungen, beispielsweise solche, die hergestellt werden unter Verwendung von beispielsweise di- oder polyfunktionellen Epoxyverbindungen, wie Di-glycidyl- oder Polyglycidylether von (cyclo)aliphatischen oder aromatischen Hydroxyverbindungen wie Ethylenglykol, Glycerol, 1,2- und 1,4-Cyclohexandiol, Bisphenole wie Bisphenol A, Polyglycidylether von Phenolformaldehyd-Novolaken, Polymere ethylenisch ungesättigter Gruppen, die Epoxy-Gruppen enthalten, wie Glycidyl(meth)acrylat, N-Glycidyl(meth)acrylamid, und/oder Allylglycidylether, wahlweise copolymerisiert mit verschiedenen anderen ethylenisch ungesättigten Monomeren, Glycidylether von Fettsäuren mit 6 - 24 C-Atomen, epoxidierte Polyalkadiene, wie epoxidiertes Polybutadien, Hydantoin-Epoxy-Harze, Glycidyl-gruppenhaltige Harze, wie Polyester oder Polyurethane, die eine oder mehrere Glycidylgruppen pro Molekül enthalten, und Gemische der genannten Harze und Verbindungen.

Die Anlagerung der Polyamine an die genannten Epoxyverbindungen erfolgt unter Ringöffnung der Oxirangruppierung. Die Reaktion kann beispielsweise in einem Temperaturbereich von 20 - 100°C erfolgen, bevorzugt aber zwischen 20 - 60°C. Gegebenenfalls kann mit 0,1 - 2 Gew.-% einer Lewis-Base wie Triethylamin oder einem Ammoniumsalz wie Tetrabutylammoniumjodid katalysiert werden.

Geeignete Polyamine sind auch Polyamin-Isocyanat-Addukte. Gebräuchliche Isocyanate für Polyamin-Isocyanat-Addukte sind aliphatische, cycloaliphatische und/oder aromatische Di-, Tri- oder Tetraisocyanate, die ethylenisch ungesättigt sein können. Beispiele hierfür sind 1,2-Propylendiisocyanat, Trimethylendiisocyanat, Tetramethylendiisocyanat, 2,3-Butylendiisocyanat, Hexamethylendiisocyanat, 2,2,4-Trimethylhexamethylen-diisocyanat, 2,4,4-Trimethylhexamethylendiisocyanat, ω,ω'-Dipropyletherdiisocyanat, 1,3-Cyclopentandiisocyanat, 1,2- und 1,4-Cyclohexandiisocyanat, Isophorondiisocyanat, 4-Methyl-1,3-diisocyanat-cyclohexan, Transvinylidendiisocyanat, Dicyclohexylmethan-4,4'-diisocyanat, 3,3'-Dimethyldicyclohexylmethan-4,4'-diisocyanat,Toluydendiisocyanat, 1,3-Bis(1-isocyanato-1-methylethyl)benzol, 1,4-Bis(1-isocyanato-1-methylethyl)benzol, 4,4'-Diisocyanatodiphenyl, 3,3'-dichloro-4,4'-diisocyanatodiphenyl, Addukte aus 2 Molen eines Diisocyanates, z.B. Hexamethylendiisocyanat oder Isophorondiisocyanat an ein Mol eines Diols, z.B. Ethylenglykol, das Addukt aus 3 Molen Hexamethylendiisocyanat an 1 Mol Wasser (erhältlich unter dem Handelsnamen Desmodur N von der Bayer AG), das Addukt aus 1 Mol Trimethylolpropan und 3 Molen Toluidendiisocyanat (erhältlich unter dem Handelsnamen Desmodur L von der Bayer AG) und das Addukt aus 1 Mol Trimethylolpropan und 3 Molen Isophorondiisocyanat.

Die Anlagerung von Polyaminen an die genannten Isocyanatverbindungen erfolgt beispielsweise in einem Temperaturbereich von 20 - 80°C, bevorzugt 20 - 60°C. Gegebenenfalls kann durch Zugabe von 0,1 bis 1 Gew. -% eines tertiären Amins, wie Triethylamin und/oder 0,1 - 1 Gew.-% einer Lewis-Säure, wie Dibutylzinnlaurat, katalysiert werden.

Wie erwähnt, können die Polyamine auch Addukte mit Acryloylverbindungen sein. Beispiele für di- oder polyfunktionelle acryloylungesättigte Verbindungen zum Herstellen von Polyaminaddukten sind in der US-PS 4 303 563 beschrieben, z.B. Ethylenglykoldiacrylat, Diethylenglykoldiacrylat, Trimethylenglykoldiacrylat, 1,3-Butylenglykoldiacrylat, 1,6-Hexamethylenglykoldiacrylat, Trimethylolpropandiacrylat, Pentaerytrituoltetraacrylat und Pentaerytrituoltriacrylat. Weitere Beispiele für verwendbare polyfunktionelle acryloyl-ungesättigte Acrylate sind:
A) Urethanacrylate, erhalten durch die Reaktion einer Isocyanatgruppe eines Polyisocyanates mit einem Hydroxyacrylat, z.B. Hexamethylendiisocyanat und Hydroxyethylacrylat, die Herstellung ist beschrieben in US-PS 3 297 745,
B) Polyetheracrylate, erhalten durch Umesterung eines hydroxyterminierten Polyethers mit Acrylsäure, beschrieben in US-PS 3 380 831.
C) Polyesteracrylat, erhalten durch Veresterung eines hydroxylgruppenhaltigen Polyesters mit Acrylsäure, beschrieben in US-PS 3 935 173.
D) polyfunktionelle Acrylate, erhalten durch die Reaktion eines hydroxylfunktionalisierten Acrylates, wie z.B. Hydroxyethylacrylat mit
   a) Dicarbonsäuren mit 4 - 15 C-Atomen,
   b) Polyepoxiden mit terminalen Glycidylgruppen,
   c) Polyisocyanaten mit terminalen Isocyanatgruppen, beschrieben in US-PS 3 560 237,
E) Acrylat-terminierte Polyester, erhalten durch die Reaktion von Acrylsäure, einem Polyol mit mindestens drei Hydroxyfunktionen und einer Dicarbonsäure, beschrieben in US-PS 3 567 494,
F) Polyacrylat, erhalten durch die Reaktion von Acrylsäure mit einem Epoxidfunktionen enthaltenden epoxidiertem Öl, wie Sojabohnenöl oder Leinsamenöl, beschrieben in US-PS 3 125 592,
G) Polyacrylat, erhalten durch die Reaktion von Acrylsäure mit Epoxidgruppen eines Diglycidylethers von Bisphenol A, beschrieben in US-PS 3 373 075,
H) Polyacrylat, erhalten durch die Reaktion von Acrylsäure an ein Epoxid-funktionalisiertes Vinylpolymer, z.B. Polymere mit Glycidylacrylat oder Vinylglycidylether, beschrieben in US-PS 3 530 100,
I) Polyacrylat, erhalten durch die Reaktion von Acrylsäureanhydrid mit Polyepoxiden, beschrieben in US-PS 3 676 398,
J) Acrylat-Urethanester, erhalten durch die Reaktion eines Hydroxyalkylacrylates, mit einem Diisocyanat und einem hydroxylfunktionalisierten Alkydharz, beschrieben in US-PS 3 676 140,
K) Acrylat-Urethanpolyester, erhalten durch die Reaktion eines Polycaprolactondiols- oder -triols mit einem organischen Polyisocyanat und mit einem Hydroxyalkylacrylat, beschrieben in US-PS 3 700 634,
L) Urethan-Polyacrylat, erhalten durch die Reaktion eines hydroxyfunktionalisierten Polyesters mit Acrylsäure und einem Polyisocyanat, beschrieben in US-PS 3 759 809.

Die Acryloyl-Endgruppen der Di- bzw.,Polyacrylmonomeren bzw. der Polyacrylate aus den Beispielen A) bis L), können mit Polyaminen funktionalisiert werden. Die Anlagerung kann z.B. in einem Temperaturbereich von 20 - 100°C, bevorzugt bei 40 - 60°C, erfolgen.

Eine weitere Methode zur Synthese eines Amin-funktionalisierten Härters ist in der EP-A-2801 beschrieben. Hier werden Acrylsäureestercopolymere mit Diaminen unter Alkoholabspaltung amidisiert. Die dabei erhaltene reaktive Gruppe besitzt folgende Stuktur: 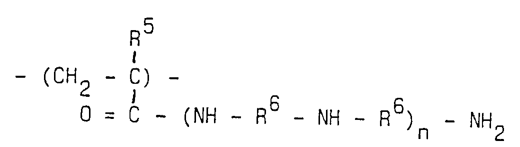
- R⁵ =: H oder CH₃,
- R⁶ =: Alkylengruppen mit 2 oder 3 C-Atomen, die gleich oder verschieden sein können
- n =: 0, 1, 2 oder 3
wobei der Rest 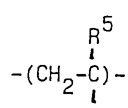 aus dem Acrylsäureestercopolymergerüst stammt.

Das Acrylsäureestercopolymere besitzt ein Zahlenmittel des Molgewichts Mn von 1000 - 20000, bevorzugt 2000 - 5000. Beispiele für mögliche Comonomere sind Ester der (Meth)acrylsäure wie z.B. Methyl-, Ethyl-, Butyl-, Cyclohexyl(meth)acrylat, Hydroxyethyl(meth)arylat, Hydroxypropyl(meth)acrylat, weiterhin (Meth)acrylsäure, Styrol und Vinyltoluol.

Besonders bevorzugt ist Methylacrylat, da dieses Monomer der Aminolyse besonders leicht zugänglich ist. Der Anteil an Methacrylat am Copolymeren beträgt 2 - 35 Gew.-%. Die Herstellung der Copolymere erfolgt durch Lösungspolymerisation in üblichen Lösungsmitteln wie Toluol, Xylole, Acetate, z.B. Butylacetat oder Ethylglykolacetat, Ethern wie Tetrahydrofuran oder Aromatengemische wie das Handelsprodukt Solvesso 100. Die Synthese der Copolymere ist dem Fachmann bekannt und bedarf keiner weiteren Erläuterung. Die Polyamine, die bei der Aminolyse eingesetzt werden, müssen mindestens zwei primäre oder sekundäre Amingruppen enthalten und wurden bereits zuvor beschrieben.

Ebenfalls als Härter verwendbar sind Reaktionsprodukte aus der Umsetzung eines (Meth)acrylsäurecopolymeren mit Alkyleniminen, wie sie in der EP-A-0 179 954 beschrieben werden. Die erhaltenen funktionellen Gruppen besitzen die Struktur: 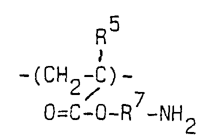
- R⁵ =: H oder CH₃
- R⁷ =: Alkylengruppe mit 2 bis 4 C-Atomen,
wobei der Rest 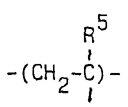 wie vorstehend definiert ist.

Neben (Meth)acrylsäure kann das Copolymer Ester der (Meth)acrylsäure oder Vinylverbindungen wie Styrol enthalten. Die beispielsweise verwendbaren Comonomeren wurden bereits bei der Definition der hydroxylgruppenhaltigen Poly(meth)acrylate b) beschrieben. Beispiele für Alkylenimine sind z.B. Propylen- oder Butylenimin.

Beispiele für ebenfalls erfindungsgemäß als Härter verwendbare Polyamine sind auch solche, die hergestellt werden durch Umsetzung von Copolymeren von α-Dimethyl-m-isopropenylbenzylisocyanat (TMI), die ein Zahlenmittel des Molgewichts (Mn) von 1000 bis 10000 aufweisen, mit Mono- oder Diketimimen, die entweder eine OH- oder sec.NH-Gruppierung enthalten.

Als Comonomere zur Herstellung der TMI-Copolymeren können alle üblichen vinylisch polymerisierbaren Monomeren ohne OH-Funktionalität verwendet werden, wie beispielsweise Ester der (Meth)acrylsäure wie z.B. Methyl-, Ethyl-, Butyl-, Isobutyl-, Ethylhexyl-, Cyclohexyl- und/oder Lauryl (meth)-acrylat gewählt werden, weiterhin Styrol, Vinyltoluol und/oder -Methylstyrol. Die Herstellung der Copolymere erfolgt über übliche radikalische Lösungspolymerisation, wie sie dem Fachmann bekannt ist. Gearbeitet wird beispielsweise in aprotischen organischen Lösemitteln, z.B. Toluol und Xylol, und Estern, z.B. Butylacetat.

Verwendet hierzu werden im allgemeinen übliche Radikalinitiatoren, wie Peroxide und Azoverbindungen. Die Reaktion erfolgt z.B. unter Erwärmen, beispielsweise auf Temperaturen von 80 bis 140°C.

Das monomere TMI kann in einem Bereich von 2 bis 40 Gew.-%, bezogen auf das Gewicht sämtlicher Monomeren copolymerisiert werden, bevorzugt aber in einem Bereich von 2 bis 25 Gew.-%.

Das Isocyanat-terminierte Copolymer wird anschließend mit einem oder mehreren mit OH- oder sec.NH-funktionalisierten Mono- und/oder Diketeniminen und/oder Mono- und/oder Dialdiminen umgesetzt.

Die Herstellung der Ketimine und/oder Aldimine (im Folgenden wird zur Vereinfachung der Ausdruck "Ketimine" gewählt, der jedoch auch Aldimine einschließen soll) erfolgt z.B. durch Umsetzung von Alkanolaminen oder Di- bzw. Triaminen, die mindestens eine primäre Aminogruppe, im Falle der Di- bzw. Triamine zusätzlich eine sekundäre Aminfunktion tragen, mit Aldehyden und/oder Ketonen unter Wasserabspaltung.

Beispiele für Alkanolamine sind:

Monoethanolamin, Monopropanolamin, Monohexanolamin oder 2-Amino-2-hydroxy-propan.

Beispiele für Di- bzw. Triamine, die mindestens eine primäre Aminogruppe und eine sekundäre Aminogruppen tragen, sind:

N-Methylpropylamin, Diethylentriamin, Dipropylentriamin oder Bishexamethyltriamin.

Zur Herstellung der TMI-Acrylat/Ketimin-Addukte müssen die primären Aminogruppen der oben genannten Amine blockiert werden.

Hierbei werden die primären Amine mit Aldehyden oder Ketonen unter Wasserabspaltung zu Schiffschen Basen bzw. Aldiminen oder Ketiminen umgesetzt. Beispiele für solche Aldehyde und Ketone sind:

C₃ - C₁₀-Verbindungen, die Hexylaldehyd, Octylaldehyd, Diisopropylketon und/oder Methylisobutylketon. Die beiden letzten Verbindungen sind besonders bevorzugt, weil sie nur eine geringe Tendenz zu Nebenreaktionen zeigen.

Die OH- oder sec.NH-funktionalisierten Mono- oder Diketimine werden bei der Anlagerung an das Isocyanat-terminierte Copolymere bevorzugt im Unterschuß eingesetzt, bevorzugt werden 90 - 95 % der Isocyanatgruppen mit OH- oder NH-Gruppen umgesetzt. Die verbleibenden überschüssigen Isocyanatgruppen werden in einem letzten Reaktionsschritt mit Monoalkoholen wie z.B. Ethanol, Propanol oder Butanol urethanisiert.

Zur Synthese der Ketimin- bzw. Aldimin-funktionalisierten (verkappten) Polyamine wird beispielsweise zuerst ein TMI-Copolymerisat durch eine radikalische Lösungspolymerisation hergestellt. Anschließend wird ein Alkanolamin oder Di- bzw. Triketimin, das sowohl mindestens eine primäre als auch eine sekundäre Aminfunktion trägt, mit dem gewünschten Blockierungsmittel Aldehyd oder Keton in einem organischen Lösemittel, das mit Wasser ein azeotropes Gemisch bildet, vorgelegt. Durch Erhitzen dieses Gemisches wird das entstehende Reaktionswasser azeotrop abdestilliert.

Es ist günstig, die Herstellung unter Inertgas durchzuführen. Das Blokkierungsmittel kann im Überschuß eingesetzt werden, das im Anschluß an die Reaktion abdestilliert werden kann. Es ist zweckmäßig, als Verkappungsmittel ein Keton/Aldehyd zu wählen, das selbst mit Wasser ein Azeotrop bildet, so daß auf ein zusätzliches organisches Lösemittel verzichtet werden kann. Zur Addition des OH- bzw. sec.NH-funktionalisierten Ketimins bzw. Aldimins an das Isocyanat-terminierte Copolymerisat wird das Ketimin bei z.B. 80°C unter Inertgas vorgelegt und das Copolymerisat in z.B. zwei Stunden zudosiert. Mit Hilfe einer Lewis-Säure, wie z.B. Dibutylzinnlaurat kann die Reaktion gegebenenfalls katalysiert werden. Nach Beendigung der Zudosierung wird, sofern das Ketimin im Unterschuß vorliegt, ein Alkohol, z.B. Butanol zugefügt. Es wird gegebenenfalls noch bei erhöhter Temperatur z.B. etwa 10 bis 30 min. gerührt.

Die vorstehende Herstellungsweise stellt lediglich ein Beispiel für eine Verfahrensweise dar. Es kann beispielsweise auch so gearbeitet werden, daß das Copolymerisat vorgelegt wird und das Ketimin zugesetzt wird.

Die terminierten (freien) Aminogruppen der Polyamin-Härterkomponente können verkappt sein, z.B. mit Ketonen oder Aldehyden unter Ausbildung Schiffscher Basen.

Alle bisher beschriebenen Polyamine besitzen gegenüber den erfindungsgemäßen Bindemittelkomponenten eine sehr hohe Reaktivität, was sich in einer sehr geringen Topfzeit äußern kann. Aus diesem Grunde kann es zweckmäßig sein, die terminierten Amingruppen der genannten Polyamine mit Aldehyden oder Ketonen unter Wasserabspaltung zu Schiffschen Basen bzw. Aldiminen oder Ketiminen umzusetzen. Beispiele für zur Verkappung verwendbare Aldehyde und Ketone sind C₃ - C₁₀-Verbindungen, wie Hexylaldehyd, Octylaldehyd, Diisopropylketon und/oder Methylisobutylketon. Die beiden letzten Verbindungen sind besonders bevorzugt, weil sie nur eine geringe Tendenz zu Nebenreaktionen zeigen.

Das Mengenverhältnis von epoxidfunktionalisiertem Polysiloxan 2) zu 2c) im härtbaren Lack wird bevorzugt so gewählt, daß das Verhältnis zwischen Epoxidgruppen und Aminfunktionen zwischen 1 : 1,5 und 1,5 : 1, bevorzugt 1 : 1,2 und 1,2 : 1 liegt.

Die epoxidfunktionalisierten Polysiloxane, wie sie vorstehend als Komponente 3) genannt werden, können beispielsweise epoxidfunktionalisierte (Meth)acrylmonomere einpolymerisiert enthalten. Ein Teil der vorhandenen Glycidylfunktionen kann mit α,β-ungesättigten Carbonsäuren verestert sein, wodurch ungesättigte Gruppierungen im Harz eingebaut werden; dies ist beispielsweise in der DE-A-40 27 259 beschrieben.

Die teilweise Umsetzung von Glycidylgruppen mit α,β-ungesättigten Carbonsäure zur Bildung der Komponente 3) kann z.B. so erfolgen, aaß man in eine erwärmte (beispielsweise 50 bis 100°C, z.B. 80°C) Polysiloxan/ Acrylharzlösung eine oder mehrere α,β-ungesättigte Carbonsäuren bis zum Erreichen der gewünschten Säurezahl einführt. Dies kann beispielsweise durch Zutropfen erfolgen. Es wird gerührt bis die Säurezahl vorzugsweise unter 1 mg KOH/g liegt.

Beispiele für verwendbare Säuren sind ein- oder mehrfach ungesättigte Monocarbonsäuren mit z.B. 2 bis 10, vorzugsweise 3 bis 6 Kohlenstoffatomen, wie Zimtsäure, Crotonsäure, Citraconsäure, Mesaconsäure, Dihydrolävulinsäure, Sorbinsäure und bevorzugt Acrylsäure und/oder Methacrylsäure.

Die Menge der Säure wird bevorzugt so bemessen, daß ein Verhältnis zwischen Acryloylgruppen und Epoxidgruppen von 8 : 2 bis 2 : 8, bevorzugt 7 : 3 und 3 : 7 vorliegt.

Als Vernetzerkomponente 3a) können Polyamine verwendet werden. Derartige Polyamine entsprechen den bereits vorstehend unter 2c) beschriebenen Polyaminen.

Das Verhältnis zwischen Epoxid- und Acryloylgruppen zu Aminfunktionen wird so gewählt, daß es zwischen 1 : 1,5 und 1,5 : 1 liegt, bevorzugt zwischen 1 : 1,2 und 1,2 : 1.

Die erfindungsgemäße für die Komponente 3) als Vernetzer verwendbare CH-acide Komponente 3b) kann z.B. hergestellt werden durch Umesterung eines aliphatischen β-Ketocarbonsäureesters mit einem Polyol.

Geeignete β-Ketocarbonsäureester sind beispielsweise Ester der Acetessigsäure bzw. alkylsubstituierter Acetessigsäuren, wie α- und/oder γ-Methylacetessigsäure. Geeignete Ester dieser Säuren sind solche mit aliphatischen Alkoholen, bevorzugt niederen Alkoholen mit 1 bis 4 Kohlenstoffatomen, wie Methanol, Ethanol oder Butanol.

Als Polyole zur Umsetzung mit den β-Ketocarbonsäureestern sind gemäß einer bevorzugten Ausführungsform der Erfindung Monomere und Polymere geeignet, die ausgewählt sind aus:
i) Polyolen aus der Gruppe von geraden oder verzweigten Alkan-di- und polyolen mit 2 bis 12 Kohlenstoffatomen,
ii) hydroxylgruppenhaltigen Poly(meth)acrylaten oder Poly(meth)acrylamiden auf der Basis von (Meth)Acrylsäurehydroxyalkylestern oder (Meth)Acrylsäure-hydroxyalkylamiden mit jeweils 2 bis 12 Kohlenstoffatomen im Alkylteil, gegebenenfalls copolymerisiert mit α,β-ungesättigten Monomeren, mit einem Zahlenmittel des Molekulargewichts (Mn) von 1000 bis 10000,
iii) hydroxylgruppenhaltigen Poly(meth)acrylaten auf der Basis von (Meth)Acrylsäurehydroxyalkylestern mit 2 bis 12 Kohlenstoffatomen im Alkylteil und gegebenenfalls copolymerisierbaren ,β-ungesättigten Monomeren, die mit cyclischen Estern von Hydroxycarbonsäuren mit 4 bis 6 Kohlenstoffatomen modifiziert sind, mit einem Zahlenmittel des Molekulargewichts (Mn) von 1000 bis 10000, und
iv) Polyester-Polyolen oder Polyether-Polyolen jeweils mit einem Zahlenmittel des Molekulargewichts (Mn) von 500 bis 2000.

Geeignete Alkan-di- und -polyole der Gruppe i) sind solche mit geraden und verzweigten Ketten mit 2 - 12 Kohlenstoffatomen. Sie enthalten mindestens zwei Hydroxyfunktionen, vorzugsweise jedoch mindestens drei. Beispiele hierfür sind Propandiol, Butandiol, Hexandiol, Glycerin, Trimethylolpropan und Pentaerythrit.

Beispiele für hydroxylgruppenhaltige Poly(meth)acrylate ii) auf der Basis von (Meth)Acrylsäurehydroxyalkylestern mit 2 bis 12 Kohlenstoffatomen im Alkylteil sind Hydroxyalkylester der Acrylsäure oder Methacrylsäure mit Alkoholen mit mindestens zwei Hydroxylgruppen, wie 1,4-Butandiol, mono (meth)acrylat, 1,6-Hexandiol-mono(meth)acrylat oder 1,2,3-Propantriolmono(meth)acrylat. Beispiele für hydroxylgruppenhaltige Poly(meth)acrylamide ii) auf der Basis von (Meth)Acrylsäurehydroxyalkylamiden sind Amide der Acrylsäure oder Methacrylsäure mit Hydroxyalkylaminen oder Di (hydroxyalkyl)aminen mit jeweils 2 bis 12 Kohlenstoffatomen im Alkylteil, die eine oder mehrere Hydroxylgruppen aufweisen können, wie Acrylsäurehydroxyethylamid. Der in der vorliegenden Beschreibung und den Patentansprüchen verwendete Ausdruck (Meth)Acryl soll und/oder Methacryl bedeuten.

Die hydroxylgruppenhaltigen Poly(meth)acrylate der Komponente ii) können Homo- oder Copolymerisate sein. Sie weisen ein Zahlenmittel des Molekulargewichts von 1000 bis 10000, bevorzugt von 3000 bis 6000 auf. Copolymerisierbare Monomere zur Herstellung der Copolymerisate sind α,β-ungesättigte Monomere, radikalisch polymerisierbare Monomere aus der Gruppe der Ester von α,β-ungesättigten Carbonsäuren, wie Acrylsäure oder Methacrylsäure, wobei Beispiele für die Alkoholkomponenten der Ester Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol, α-Methylstyrol und Vinyltoluol. Weitere Beispiele sind Vinylester kurzkettiger Carbonsäuren, wie Vinylacetat, Vinylpropionat und Vinylbutyrat.

Die hydroxylgruppenhaltigen Poly(meth)acrylate der vorstehend definierten Komponente iii) können modifizierte Poly(Meth)acrylat-homo- und -copolymere sein, wie sie unter ii) beschrieben werden, deren Hydroxylgruppen ganz oder partiell mit cyclischen Estern, wie z.B. von Hydroxycarbonsäuren mit 4 bis 6 Kohlenstoffatomen, wie Butyrolacton oder Caprolacton umgesetzt sind. Die erhaltenen modifizierten Poly(meth)acrylate der Komponente iii) weisen ein Zahlenmittel des Molekulargewichts Mn von 1000 bis 10000 auf.

Beispiele für die Polyesterpolyole und Polyetherpolyole der Komponente iv) sind solche mit einem Zahlenmittel des Molekulargewichts Mn von 500 bis 2000. Spezielle Beispiele sind Umsetzungsprodukte von Di- bzw. Tricarbonsäuren, wie Adipinsäure oder Trimellithsäure, mit Polyolen, wobei die Polyole im Überschuß vorliegen. Weitere Beispiele sind Umsetzungsprodukte von Di- oder Triolen, wie Propandiol, Butandiol oder Glycerin, mit Ethylenoxid oder Propylenoxid. Die Synthese der C-H-aciden Komponente kann beispielsweise über mehrere Stufen erfolgen. Das Polyol wird zunächst nach Entfernen von gegebenenfalls vorhandenem Lösemittel mit dem aliphatischen β-Ketocarbonsäureester umgeestert.

Bei der Umesterung des Polyoles kann beispielsweise so verfahren werden, daß das gegebenenfalls von Lösemittel durch Anlegen eines Vakuums befreite Polyol vorgelegt iwrd. Der β-Ketocarbonsäureester wird nun im Überschuß zugegeben, beispielsweise zugetropft. Die Reaktion erfolgt bei erhöhter Temperatur; der freigesetzte Alkohol wird aus dem System entfernt.

Zur Beschleunigung der Reaktion ist auch die Zugabe eines Katalysators möglich. Beispiele für derartige Katalysatoren sind Säuren, wie Ameisensäure oder p-Toluolsulfonsäure. Es ist günstig bei der Umesterung die Reaktionstemperatur kontinuierlich zu erhöhen (beispielsweise in Schritten von 10°C/20 min), bis eine Temperatur erreicht ist, die knapp (etwa 10°C) unterhalb des Siedepunktes des β-Ketocarbonsäureesters liegt. Nach quantitativer Umesterung wird der überschüssige β-Ketocarbonsäureester entfernt, beispielsweise durch Anlegen eines Vakuums. Anschließend kann das Gemisch abgekühlt und mit einem inerten Lösemittel auf einen gewünschten Festkörpergehalt eingestellt werden.

Die Härterkomponente 3b) kann zur Viskositätseinstellung auch 2-Acetoacetoxy-ethylmethacrylat als Reaktivverdünner enthalten.

Acetessigesterfunktionalisierte Komponenten können durch Umsetzung der β-Carbonylgruppen mit primären und/oder sekundären Monoaminen in ihrer CH-Acidität verstärkt werden, wie z.B. DE-A-39 32 517 beschrieben.

Die Komponente 3b) enthält bevorzugt eingemischt einen oder mehrere Katalysatoren in Form von Lewis-Basen oder Brönstedt-Basen, wobei die konjugierten Säuren der letzteren einen pKA-Wert von mindestens 10 haben. Als besonders geeignet erwiesen sich Lewis-Basen, wie z.B. solche der Gruppe von cycloaliphatischen Aminen, wie Diazabicyclooctan (DABC0), tert.-aliphatischenaminen, wie Triethylamin, Tripropylamin, N-Methyldiethanolamin, N-Methyl-diisopropylamin oder N-Butyl-Diethanolamin, sowie Amidinen wie Diazabicyloundecen (DBU), und Guanidinen, wie z.B. N,N,N',N'-Tetramethylguanidin. Weitere Beispiele sind alkyl- oder arylsubstituierte Phosphane, wie z.B. Tributylphosphan, Triphenylphosphan, Tris-p-Tolylphosphan, Methyl-diphenylphosphan, sowie hydroxy- und aminfunktionalisierte Phosphane, wie z.B. Trishydroxymethylphosphan und Tris-dimethylamino-ethylphosphan.

Beispiele für die einsetzbaren Brönstedt-Basen sind Alkoholate, wie Natrium- oder Kaliumethylat, quartäre Ammoniumverbindungen, wie Alkyl-, Aryl- oder Benzylammoniumhydroxide oder -halogenide, wie z.B. Tetraethyl- oder Tetrabutylammoniumhydroxid oder -fluorid, sowie Trialkyl- oder Triaryl-phosphoniumsalze oder -hydroxide.

Die Menge der Katalysatoren beträgt beispielsweise 0,01 bis 5 Gew.-%, vorzugsweise 0,02 bis 2 Gew.-%, bezogen auf das Gesamtfeststoffgehalt der Komponenten 3) und 3b).

Bei den unter 3c) genannten Vernetzern handelt es sich um solche, die mindestens zwei umesterungsfähige Gruppen enthalten, die aus beispielsweise einer oder mehreren der folgenden Gruppierungen stammen, die gleich oder verschieden sein können: 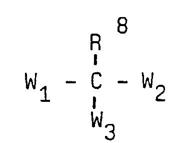 worin R = Alkyl und bevorzugt H, 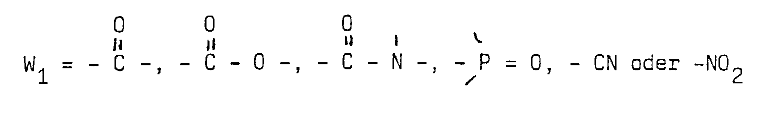 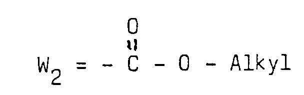 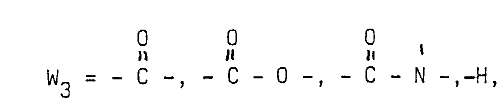 Alkyl oder Alkylen wobei Alkyl und Alkylen bevorzugt 1 bis 6 C-Atome haben, und wobei die vorstehend für die Reste W₁, W₂ und W₃ definierten Carboxyl- oder Carbonamid-Gruppen jeweils über das Kohlenstoffatom an die Gruppe CR⁸ gebunden sind und die Gruppe CR⁸ über mindestens einen der Reste W₁, W₂ und/oder W₃ an eine polymere oder oligomere Einheit gebunden ist. Die Funktionalität der Komponente 3c) beträgt im Mittel über 2 pro Molekül.

Wie vorstehend erwähnt, beträgt die Funktionalität der Komponente 3c) im Mittel über 2. Dies bedeutet, daß im Gemisch mit höherfunktionellen Molekülen auch monofunktionelle Moleküle verwendet werden können.

Die vorstehend beschriebenen Vernetzerkomponenten 3c) enthalten mit W₂ mindestens eine Estergruppe, die mit hydroxylgruppenhaltigen Verbindungen im Sinne einer Umesterungsaktion vernetzen kann.

Bevorzugt sind die Vernetzerverbindungen im wesentlichen frei von primären, sekundären oder tertiären Aminogruppen, da diese die Lagerstabilität und die Lichtbeständigkeit negativ beeinflussen können.

Im Folgenden sind Beispiele für umesterungsfähige Vernetzerkomponenten 3c) aufgeführt, die unter die vorstehende bevorzugte allgemeine Formel fallen. Diese Beispiele werden im Folgenden in drei Gruppen A1, A2 und A3 unterteilt.

In der Gruppe A1 sind im Molekül im Mittel mindestens zwei Gruppen enthalten, die sich von Methantricarbonsäuremonoamideinheiten oder Acetessigsäureester-2-carbonsäureamiden ableiten.

Geeignete Verbindungen A1 sind beispielsweise Umsetzungsprodukte von Malonsäurediester wie Malonsäuredimethyl-, diethyl-, dibutyl-, dipentylester oder Acetessigsäureester wie Acetessigsäuremethyl-, ethyl-, -butyl--pentylester mit Polyisocyanaten.

Beispiele für derartige erfindungsgemäß einsetzbare Isocyanate sind cycloaliphatische, aliphatische oder aromatische Polyisocyanate wie Tetramethylen-diisocyanat, Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcylohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4'-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet.

In diesen bekannten Prepolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen.

Die Art und Mengenverhältnisse der bei der Herstellung der NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 bis 4000 aufweisen.

Als Verbindung A1 eignen sich aber auch Umsetzungsprodukte von Estern und Teilestern mehrwertiger Alkohole der Malonsäure mit Monoisocyanaten. Mehrwertige Alkohole sind z.B. zwei- bis fünf-wertige Alkohole wie Ethandiol, die verschiedenen Propan-, Butan-, Pentan- und Hexandiole, Polyethylen- und Polypropylendiole, Glycerin, Trimethylolethan und - propan, Pentaerythrit, Hexantriol und Sorbit. Geeignete Monoisocyanate sind z.B. aliphatische Isocyanate wie n-Butylisocyanat, Octadecylisocyanat, cycloaliphatische Isocyanate wie Cyclohexylisocyanat, araliphatische Isocyanate wie Benzylisocyanat oder aromatische Isocyanate wie Phenylisocyanat.

Geeignet sind auch die entsprechenden Malonester von OH-Gruppen enthaltenden Acrylharzen, Polyester, Polyurethanen, Polyethern, Polyesteramiden und -imiden und/oder Umsetzungsprodukte von Malonsäurehalbestern wie Malonsäuremonoethylester mit aliphatischen und aromatischen Epoxidharzen, z.B. epoxidgruppenhaltigen Acrylatharzen, Glycidylethern von Polyolen wie Hexandiol, Neopentylglykol, Diphenylolpropan und -methan und Glycidylgruppen enthaltenden Hydantoinen, ferner Gemische dieser Verbindungen.

Die Beispiele der folgenden Gruppe A2 zeigen eine geeignete Härtungskomponente, die mindestens zwei Gruppen der Formel (II) 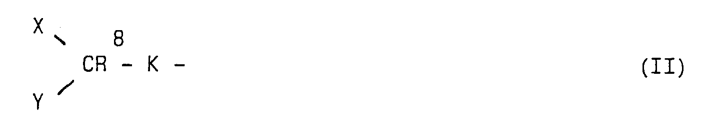 oder Struktureinheiten der Formel (II') 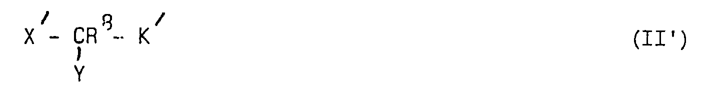 enthält, in der bedeuten: 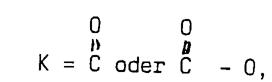 wobei die letztere Gruppe über das C-Atom an die CH-Gruppe gebunden ist; 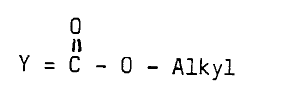 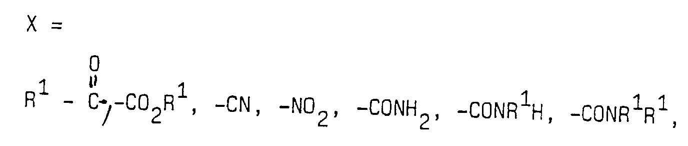 wobei die Reste R¹ gleich oder verschieden sein können und für einen Kohlenwasserstoffrest, vorzugsweise einen Alkylrest mit 1 bis 12, vorzugsweise 1 bis 6 C-Atomen stehen, der auch durch Sauerstoff oder einen N-Alkylrest unterbrochen sein kann. 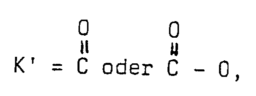 wobei letztere Gruppe über das C-Atom an die CR⁸-Gruppe gebunden ist,

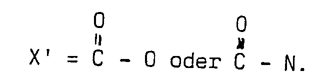

Die Zahl der Gruppe (II) in dem verwendbaren Härter beträgt vorzugsweise 2 bis 20 und insbesondere 2 bis 10, wobei sich die größeren Zahlenwerte auf oligomere oder polymere Produkte beziehen und hier Mittelwerte darstellen.

Vorzugsweise besitzt die erfindungsgemäß verwendbare Härtungskomponente A2 die Formel (III) 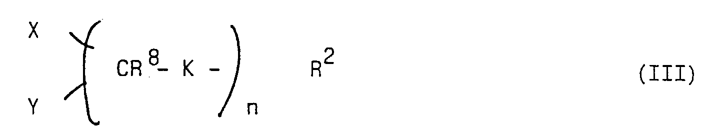 in der X, Y und K die obige Bedeutung haben, R² den Rest eines Polyols 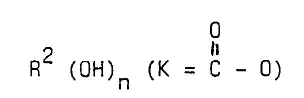 oder den Rest R² einer Polycarbonsäure 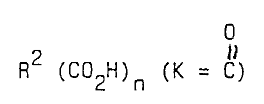 darstellt und n mindestens 2, vorzugsweise 2 bis 20, insbesondere 2 bis 10 bedeutet. Im Falle von oligomeren oder polymeren Härtungskomponenten handelt es sich bei diesen Zahlenangaben wiederum um Mittelwerte.

Weiterhin bevorzugt sind Härtungskomponenten, die unter die Gruppe A2 fallen, die man durch nicht quantitative erfolgende Umesterung von Verbindungen der Formel (IV) oder der Formel (V) 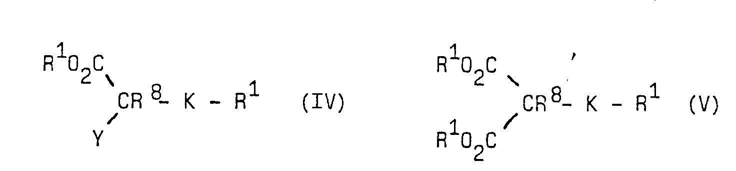 mit Polyolen R² (OH)ₙ erhält, wobei Y, K und R¹ die obige Bedeutung haben, und die Reste R¹ gleich oder verschieden sein können.

Bei den vorstehend genannten Polyolen R²(OH)ₙ kann es sich um einen mehrwertigen Alkohol handeln, der vorzugsweise 2 bis 12, insbesondere 2 bis 6 C-Atome enthält. Beispiele hierfür sind: Ethylenglykol, Propylenglykol-(1,2) und -(1,3), Butylenglykol-(1,4) und -(2,3), Di-β-hydroxyethylbutandiol, Hexandiol-(1,6), Octandiol-(1,8), Neopentylglykol, Cyclohexandiol-(1,6), 1,4-Bis-(hydroxymethyl)-cyclohexan, 2,2-Bis-(4-hydroxycylohexyl)-propan, 2,2-Bis-(4-(β-hydroxyethoxy)phenyl)-propan, 2-Methyl-1,3-propandiol, Glycerin, Trimethylolpropan, Hexantriol-(1,2,6), Butantriol-(1,2,4), Tris-(β-hydroxyethyl)-isocyanurat, Trimethylolethan, Pentaerythrit und deren Hydroxyalkylierungsprodukten, ferner Fiethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol. Auch Polyester, die aus oder mit Lactonen, z.B.ε-Caprolacton oder Hydroxycarbonsäuren, wie z.B. Hydroxypivalinsäure, γ-Hydroxydecansäure, γ-Hydroxycapronsäure, Thioglykolsäure erhalten werden, können eingesetzt werden. Der Index n in obiger Formel (III) steht im Falle derartiger mehrwertiger Alkohole vorzugsweise für 2 bis 4.

Alternativ kann das Polyol eine oligomere oder polymere Polyolverbindung (Polyolharz) darstellen, deren Zahlenmittel des Molekulargewichts, Mn, (bestimmt mittels Gelchromatographie; Polystyrolstandard), üblicherweise im Bereich von etwa 170 bis 10000, vorzugsweise etwa 500 bis etwa 5000 liegt. In Sonderfällen kann Mn jedoch 10000 g/mol und mehr betragen. Als Oligomere/Polymere kommen dabei Polymerisate, Polykondensate oder Polyadditionsverbindungen in Betracht. Die Hydroxylzahl beträgt im allgemeinen 30 bis 250, vorzugsweise 45 bis 200 und insbesondere 50 bis 180 mg KOH/g. Diese OH-gruppenhaltigen Verbindungen können gegebenenfalls noch andere funktionelle Gruppen enthalten, wie Carboxylgruppen.

Beispiele für derartige Polyole sind Polyetherpolyole, Polyacetalpolyole, Polyesteramidpolyole, Polyamidpolyole, Epoxidharzpolyole oder deren Umsetzungsprodukte mit CO₂, Phenolharzpolyole, Polyharnstoffpolyole, Polyurethanpolyole, Celluloseester und -etherpolyole, teilweise verseifte Homo- und Copolymerisate von Vinylestern, teilweise acetalisierte Polyvinylalkohole, Polycarbonatpolyole, Polyesterpolyole oder Acrylatharzpolyole. Bevorzugt sind Polyetherpolyole, Polyesterpolyole, Acrylatharze und Polyurethanpolyole. Derartige Polyole, die auch in Mischung eingesetzt werden können, sind beispielsweise in der DE-OS 31 24 784 beschrieben.

Beispiele für Polyurethanpolyole ergeben sich aus der Umsetzung von Di- und Polyisocyanaten mit einem Überschuß an Di- und/oder Polyolen. Geeignete Isocyanate sind z.B. Hexamethylendiisocyanat, Isophorondiisocyanat, Toluylendiisocyanat als auch Isocyanate, gebildet aus drei Molen eines Diisocyanats wie Hexamethylendiisocyanat oder Isophorondiisocyanat, und Biurete, die aus der Reaktion von drei Molen eines Diisocyanates mit einem Mol Wasser hervorgehen. Geeignete Polyharnstoffpolyole können in ähnlicher Weise durch Umsetzen von Di- und Polyisocyanaten mit äquimolaren Mengen von Aminoalkoholen, z.B. Ethanolamin oder Diethanolamin, erhalten werden.

Beispiele für Polyesterpolyole sind die bekannten Polykondensate aus Di- oder Polycarbonsäuren oder deren Anhydriden, wie Phthalsäureanhydrid, Adipinsäure usw., und Polyolen wie Ethylenglykol, Trimethylolpropan, Glycerin usw.

Geeignete Polyamidpolyole können in ähnlicher Weise wie die Polyester erhalten werden, in dem man die Polyole zumindest teilweise durch Polyamine, wie Isophorondiamin, Hexamethylendiamin, Diethylentriamin usw. ersetzt.

Beispiele für Polyacrylatpolyole oder OH-gruppenhaltige Polyvinylverbindungen sind die bekannten Copolymerisate aus hydroxylgruppenhaltigen (Meth)Acrylsäureestern oder Vinylakohol und anderen Vinylverbindungen, wie z.B. Styrol oder (Meth)Acrylsäureestern.

Die obigen Polycarbonsäuren R²(CO₂H)ₙ, wobei n hier bevorzugt 2 bis 4 ist, können aliphatischer, cycloaliphatischer, aromatischer und/oder heterocyclischer Natur sein und gegebenenfalls, z.B. durch Halogenatome, substituiert und/oder gesättigt sein. Als Beispiele für solche Carbonsäuren und deren Derivate seien genannt: Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, 1,3- und 1,4-Cyclohexandicarbonsäure und Tetrachlorphthalsäure, Endomethylentetrahydrophthalsäure und ihr Hexachlorderivat, Glutarsäure, Maleinsäure, Fumarsäure, dimere und trimere Fettsäuren, wie Ölsäure, gegebenenfalls in Mischung mit monomeren Fettsäuren oder cyclischen Monocarbonsäuren, wie Benzoesäure, p-tert-Butylbenzoesäure oder Hexahydrobenzoesäure. Weiterhin die Umsetzungsprodukte der oben genannten Polyole R²(OH)ₙ mit cyclischen Carbonsäureanhydriden.

Bei der erfindungsgemäß verwendbaren Härtungskomponente A2 handelt es sich, je nach Art der Polyol- bzw. Polycarbonsäurekomponente, um mehr oder weniger viskose Flüssigkeiten oder um Feststoffe, die zumindest in den üblichen Lacklösemitteln weitgehend löslich sind und vorzugsweise weniger als 5 Gew.-%, insbesondere weniger als 1 Gew.-% an vernetzen Anteilen enthalten. Das Umesterungs-Äquivalentgewicht, das ein Maß für die Menge an Gruppen (II) bzw. Struktureinheiten (II') in (A2) ist, liegt im allgemeinen zwischen 100 und 5000, vorzugsweise 200 und 2000 und das Zahlenmittel des Molekulargewichts Mn in der Regel zwischen 200 und 10000, vorzugsweise zwischen 500 und 5000 (gelchromatographisch bestimmt; Polystyrolstandard). Verfahren zur Herstellung solcher Verbindungen sind in der EP-A-0 310 011 näher beschrieben.

Weitere Beispiele für die erfindungsgemäß verwendbare Härterkomponente sind solche vom Typ A3, bei dem sich die umesterungsfähige Gruppierung ableitet von einer Verbindung mit der Gruppierung -CO-CR⁸R³-COOR⁴, worin R³ C₁-C₈-Alkyl, H, vorzugsweise Wasserstoff und R⁴ = Alkyl wie z.B. Methyl, Ethyl, Butyl, t-Butyl ist.

Die vorstehenden Gruppierungen von A3 können an mindestens eine mehrwertige monomere oder polymere Verbindung gebunden sein. Sie können beispielsweise an mindestens eine Verbindung der Gruppe ein- oder mehrwertige Alkohole, OH-Gruppen enthaltende Polymere, Polyamine und Polymercaptane gebunden sein. Sie sind, bezogen auf die Umesterungsfunktion, mehrwertig. So können sie beispielsweise durch Veresterung eines Polyepoxids mit einem die Gruppierung bildenden Dicarbonsäuremonoester, z.B. Malonsäuremonoester, hergestellt worden sein. Man erhält so eine Komponente A3 mit einer umesterungsfähigen Gruppe je Epoxidgruppe. Hierbei lassen sich aromatische oder aliphatische Polyepoxide einsetzen.

Weitere Beispiele für geeignete Dicarbonsäuremonoester sind Malonsäuremonoalkylester, Acetondicarbonsäuremonoalkylester wobei der Alkylrest geradkettig oder verzweigt mit 1 bis 6-Atomen, z.B. Methyl, Ethyl, n-Butyl oder t-Butyl sein kann.

Die Härterkomponenten 3c) können in üblichen Lösemitteln hergestellt werden. Es ist günstig, solche Lösemittel zu verwenden, die später bei der Herstellung des Überzugsmittels nicht stören. Es ist auch günstig, den Gehalt an organischen Lösemitteln möglichst gering zu halten. Wenn die Härterkomponente 3c) polare Gruppen enthält, z.B. Amid- oder Urethan-Gruppierungen, so ist eine leichte Dispergierung in Wasser möglich. Dies kann gegebenenfalls auch dadurch unterstützt werden, daß die Vernetzerkomponenten neutralisierbare ionische Gruppen, z.B. Carboxylgruppen, im Oligomer- oder Polymergerüst enthalten. Solche Vernetzer mit ionischen Gruppen können gut in Wasser dispergiert werden. Dabei kann der Gehalt an organischen Lösemitteln auf niedrige Werte gesenkt werden, ohne die Viskosität der Vernetzerlösung wesentlich zu erhöhen.

Das Verhältnis zwischen 3) und 3c) wird bevorzugt so gewählt, daß das Verhältnis der OH-Funktionen 3), erhalten durch die Anlagerungsreaktion der α,β-ungesättigten Säuren an die Glycidylgruppen und der zur Umesterung fähigen Gruppen zwischen 1 : 1,5 und 1,5 : 1, bevorzugt zwischen 1 : 1,2 und 1,2 : 1 liegt. Zusätzlich können die im Harz 3) enthaltenen ungesättigten Bindungen auch in Gegenwart von Radikal initiatoren polymerisiert werden, wodurch ein weiterer Vernetzungseffekt erzielt wird. Als Radikalinitiatoren können beispielsweise die vorstehend zur Polymerisation der Monomeren beschriebenen Initiatoren verwendet werden.

Die erfindungsgemäßen Bindemittelzusammensetzungen können in üblicher weise zu Überzugsmitteln formuliert werden. Dies erfolgt im allgemeinen durch Zusatz von Lösemitteln oder Wasser.

Geeignete organische Lösemittel für die Herstellung von Überzugsmitteln, beispielsweise Lacken, sind solche, wie sie auch bei der Herstellung der Einzelkomponenten 1), 1a) - 1c), 2), 2a) - 2c, 3), 3a) - 3c) verwendet werden können. Beispiele für derartige Lösemittel sind organische Lösemittel, wie aliphatische und aromatische Kohlenwasserstoffe, beispielsweise Toluol, Xylol, Gemische aliphatischer und/oder aromtischer Kohlenwasserstoffe, Ester, Ether und Alkohole. Es sind dies lackübliche Lösemittel. Zur Herstellung der Überzugsmittel aus den erfindungsgemäßen Bindemitteln können auch wäßrige Lösungen bereitet werden. Hierzu können gegebenenfalls geeignete Emulgatoren verwendet werden, wie sie auf dem Lacksektor üblich sind.

Zur Herstellung der Überzugsmittel können übliche Additive zugesetzt werden, wie sie beispielsweise auf dem Lacksektor üblich sind. Beispiele für solche Additive sind Pigmente, beispielsweise transparente oder deckende farbgebende Pigmente wie Titandioxid oder Ruß und Effektpigmente, wie Metallschuppenpigmente und/oder Perlglanzpigmente.

Die erfindungsgemäßen Bindemittelzusammensetzungen eignen sich besonders günstig für Überzugsmittel, die eine schmutzabweisende Wirkung haben sollen.

Weitere Beispiele für Additive sind Füllstoffe, wie z.B. Talkum und Silikate; Weichmacher, Lichtschutzmittel, Stabilisatoren und Verlaufsmittel, wie Silikonöle.

Die aus den erfindungsgemäßen Bindemitteln hergestellten Überzugsmittel können auf die gewünschte Applikationsviskosität durch entsprechende Regelung des Zusatzes von Lösemitteln und/oder Wasser und/oder Additiven eingestellt werden.

Die Aushärtung von aus den Überzugsmitteln erstellten Überzügen kann in einem weiten Temperaturbereich von beispielsweise -10°C bis 200°C erfolgen und ist abhängig von der jeweiligen Art der Vernetzungsreaktionen.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik, Putz, Zement und insbesondere Metall. Die Überzugsmittel können auch im Mehrschichtverfahren eingesetzt werden. So können sie beispielsweise auf übliche Grundierungen, Basislacke, Füller oder auf bereits vorhandene Decklacke aufgetragen werden.

Ein besonders bevorzugtes Anwendungsgebiet für die erfindungsgemäßen Bindemittel stellt die Bereitstellung von Überzugsmittel für Lackierungen, die eine hohe schmutzabweisende Wirkung besitzen sollen.

Die vorliegende Erfindung betrifft somit auch Verfahren zur Herstellung von Überzügen auf verschiedenen Substraten, bei denen auf das Substrat ein aus den erfindungsgemäßen Bindemitteln hergestelltes Überzugsmittel appliziert wird, worauf getrocknet und gehärtet wird. Die Erfindung betrifft auch die Verwendung der erfindungsgemäßen Bindemittelzusammensetzungen in Decklacken oder Klarlacken.

In jedem Falle erhält man mit den aus den erfindungsgemäßen Bindemitteln hergestellten Überzugsmitteln Filme mit guter Härte und guter Wasser- und Lösemittelbeständigkeit, insbesondere hoher schmutzabweisender Wirkung, wobei die schmutzabweisende Wirkung, z.B. die Antigraffiti-Wirkung über lange Zeiträume selbst unter ungünstigen Bewitterungsbedingungen erhalten bleibt.

Die Applikation der erfindungsgemäßen Überzugsmittel kann in üblicher Weise erfolgen, beispielsweise durch Tauchen, Spritzen, Streichen oder auf elektrostatischem Wege.

Die folgenden Beispiele dienen zur Erläuterung der Erfindung. Alle Teile (T) beziehen sich auf das Gewicht.

### Beispiel 1

### Herstellung eines erfindungsgemäßen Bindemittels:

In einem 4-Liter-Dreihalskolben, der mit Rührer, Tropftrichter und Rückflußkühler versehen ist, werden

| | |
|---|---|
| 220 T | des α,ω-hydroxyfunktionellen Polydimethylsiloxans I mit |
| 170,5 T | Xylol |

vorgelegt und zum Sieden erhitzt. Anschließend wird ein Gemisch aus

| | |
|---|---|
| 5,5 T | Acrylsäure |
| 56 T | Butylmethacrylat |
| 97 T | Ethylhexylacrylat |
| 144 T | Styrol |
| 176 T | Methylmethacrylat |
| 30 T | Butylacrylat |
| 620,4 T | Hydroxypropylmethacrylat |
| 31,9 T | tert. Butylperbenzoat |

innerhalb von 5 Stunden kontinuierlich zudosiert. Danach werden nochmals 60,5 T Xylol und 2,9 T Butylperbenzoat zugegeben und unter Rückfluß weitere zwei Stunden gerührt. Das Gemisch wird dann mit 565 T Butylacetat (nach Angabe:Falscher Wert) auf einen Festkörper von 55,1 % eingestellt.

Polydimethylsiloxan (I): 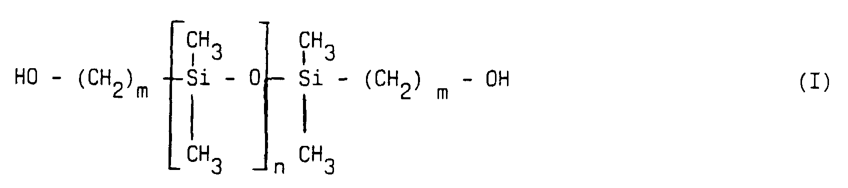
- n =: angenähert 10
- m =: 2

### Beispiel 2

### Herstellung eines erfindungsgemäßen Bindemittels

In einem 4-Liter-Dreihalskolben, der mit Rührer, Tropftrichter und Rückflußkühler versehen ist, werden

| | |
|---|---|
| 400 T | des α,ω-hydroxyfunktionellen Polydimethylsiloxans (I) |
| 600 T | Butylacetat |

auf 142°C erhitzt. Anschließend wird ein Gemisch aus

| | |
|---|---|
| 5 T | Acrylsäure |
| 48,2 T | Butylmethacrylat |
| 88,2 T | Ethylhexylacrylat |
| 131 T | Styrol |
| 160 T | Methylmethacrylat |
| 40 T | Butylacrylat |
| 564 T | Hydroxypropylmethacrylat |
| 29 T | tert. Butylperbenzoat |

innerhalb von 5 Stunden kontinuierlich zudosiert. Danach werden nochmals 48,6 T Butylacetat und 2,6 T tert. Butylperbenzoat zugegeben und unter Rückfluß weitere zwei Stunden gerührt. Das Gemisch wird dann mit 498,3 T Butylacetat auf einen Festkörper von 56,0 % eingestellt.

### Vergleichsversuch A

### Herstellung eines polysiloxanfreien Bindemittels

Es wird wie in Beispiel 1 und 2 verfahren, jedoch auf das Polysiloxan verzichtet und durch die entsprechende Menge Solvesso 100 (Gemisch aromatischer Kohlenwasserstoffe) ersetzt.

In einem 4-Liter-Dreihalskolben, der mit Rührer, Tropftrichter und Rückflußkühler versehen ist, werden

| | |
|---|---|
| 320 T | Solvesso 100 |
| 169,5 T | Butylacetat |

auf 142°C erhitzt. Anschließend wird ein Gemisch aus

| | |
|---|---|
| 4,8 T | Acrylsäure |
| 59,1 T | Butylmethacrylat |
| 91 T | Ethylhexylacrylat |
| 161 T | Styrol |
| 171 T | Methylmethacrylat |
| 32 T | Butylacrylat |
| 555 T | Hydroxypropylmethacrylat |
| 30,1 T | tert. Butylperbenzoat |

innerhalb von 5 Stunden kontinuierlich zudosiert. Danach werden nochmals 53,4 T Butylacetat und 2,6 T tert. Butylperbenzoat zugegeben und unter Rückfluß weitere zwei Stunden gerührt. Das Gemisch wird dann mit 348,9 T Butylacetat auf einen Festkörper von 54,5 % eingestellt.

### Beispiel 3

### Herstellung von Lacken

### Lackbeispiel 3a

| | |
|---|---|
| 56 T | des Bindemittels von Beispiel 1 |
| 4 T | Butylglykolacetat |
| 0,6 T | eines Benzotriazolderivates (UV-Stabilisator) |
| 0,6 T | einer Lösung eines sterisch gehinderten Amins |
| 0,1 T | eines handelsüblichen silikonhaltigen Verlaufsmittels |
| 18,7 T | eines Gemisches niedermolekularer Ester |
| 20 T | eines Biurets eines aliphatischen Isocyanats |

wurden homogen miteinander vermischt. Anschließend wurde auf einem handelsüblichen Decklack auf der Basis organischer Lösemittel naß-in-naß in zwei bis drei Spritzgängen mit einer Trockenfilmdicke von 30 - 100 µm appliziert. Der Lack wurde anschließend 16 Stunden bei Raumtemperatur gehärtet.

### Lackbeispiel 3b)

Es wurde wie bei Lackbeispiel 3a) verfahren, wobei das Bindemittel von Beispiel 1 durch das Bindemittel von Beispiel 2 ersetzt wurde.

### Lackbeispiel 3c) (Vergleich)

Es wurde wie bei Lackbeispiel 3a) verfahren, wobei Bindemittel von Beispiel 1 durch das Bindemittel von Vergleichsversuch A ersetzt wurde.

### Vergleichsversuch B

Es wurde wie bei Lackbeispiel 3a) verfahren, wobei das Bindemittel von Beispiel 1 durch eine homogene Mischung aus 52 T des Bindemittels von Vergleichsversuch A und 4 T des Polysiloxans aus der Beschreibung der Beispiele 1 und 2 ersetzt wurde.

Es wurden folgende Untersuchungen vorgenommen.
Oberflächenspannung : Zur Messung der Haftung von Farben auf Oberflächen kann die Oberflächenspannung als Meßkriterium dienen. Die Messung erfolgte mit standardisierten Testtinten, die sich bei einer definierten Oberflächenspannung nach der Auftragung auf das Objekt zusammenzieht.
Testtinte der Fa. ARCOTEC.
nach 100 WOM : Die Oberflächenspannungsmessung sowie die Enthaftungsprüfung wurde nach 24 Stunden und 100 Stunden, bei dem das Blech einer Weatherometer (WOM)-sunshine-Prüfung unterzogen wurde, geprüft.
Enthaftung : Das Objekt wurde nach der Lackaushärtung mit handelsüblichen Spraydosenlacken besprüht. Nach Trocknen dieser Lackschicht wurden diese Flächen mit Klebeband versehen. Wurde beim Abreißen des Bandes die Spraydosenlackschicht mit entfernt, war die gewünschte Enthaftung vorhanden (Beurteilung i.O.); verblieb der Lack auf dem Blech, war der Test n.i.O.
Chemikalienbeständigkeit : Die Chemikalientests erfolgten mit dem Lösemittel Xylol, Ethylglykol und Methoxypropylacetat nach DIN 53 168.

| **Lackbeispiel** | **Oberflächenspannung** | | **Enthaftung** | | **Chemikalienbeständigkeit** |
|---|---|---|---|---|---|
| | 24 h | nach 1000 h WOM | 24 h | nach 1000 h WOM | |
| 3a | < 30 mN/m | < 30 mN/m | i.O. | i.O. | i.O. |
| 3b | < 30 mN/m | < 30 mN/m | i.O. | i.O. | i.O. |
| 3c (Vergleich) | 38-40 mN/m | 38-40 mN/m | n.i.O. | n.i.O. | i.O. |
| Vergleichsversuch B | < 30 mN/m | 38-40 mN/m | i.O. | n.i.O. | i.O. |

### Beispiel 4

### Herstellung eines wäßrigen Klarlackes

### a) Herstellung einer wäßrigen Emulsion:

In einem 1 Liter-Kolben werden 84 T einer 20 %igen wäßrigen Lösung eines Emulgators auf der Basis eines Polyoxypropylenpolyoxyethylensorbitansäurediesters bei 60°C vorgelegt. Das Gemisch wird mit einem Rührer, der mit einer Geschwindigkeit von ca. 8500 Umdrehungen/min. rotiert, gerührt. Innerhalb von 3 Minuten werden 256 T des im Beispiel 1 hergestellten Polyacrylates sowie 66 T vollentsalztes Wasser zugegeben. Die erhaltene milchig-weiße Emulsion hat einen Festkörpergehalt von 39,5 %.

### b) wäßrige Klarlackzusammensetzung

| | |
|---|---|
| 85,1 T | Emulsion aus Beispiel 4a) |
| 15,1 T | Cymel 327 (handelsübliches wasserlösliches Melaminharz) |

Der wäßrige Klarlack wird mit Hilfe einer Rakel in einer Trockenfilmschichtdicke von ca. 30 µm auf eine Glasplatte appliziert und nach einer 20-minütigen Ablüftphase (10 min. Raumtemperatur, 10 min. 80°C) 20 Minuten bei 140°C eingebrannt.

Es resultiert ein klarer Film mit hoher Härte und niedriger Oberflächenspannung.

## Patentansprüche

1. Für Überzugsmittel geeignete polysiloxanhaltige Bindemittel, erhältlich durch radikalisch initiierte Polymerisation von
97 bis 60 Gew.-% eines oder mehrerer (Meth)acrylmonomerer und gegebenenfalls zusätzlich eines oder mehrerer davon unterschiedlicher, radikalisch polymerisierbarer Monomerer, in Gegenwart von
3 bis 40 Gew.-% eines oder mehrerer α,ω-hydroxy-,-carboxy- und/oder epoxyfunktioneller Polysiloxane, der allgemeinen Formel (I) 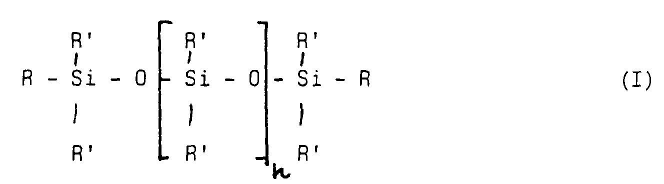
worin die Reste R' gleich oder verschieden sein können und Alkylreste mit 1 bis 6 Kohlenstoffatomen bedeuten und worin die Reste R gleich oder verschieden sein können und
- Alk - OH
- Alk (OAlk)ₚ - OH 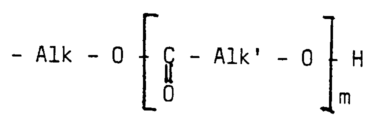 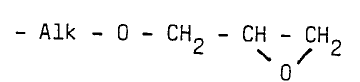
oder 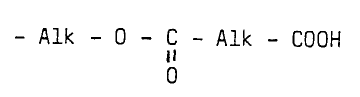 bedeuten,
worin Alk und Alk' Alkylengruppen mit 1 bis 6 Kohlenstoffatomen sind und mehrere in einem Molekül enthaltene Alkylengruppen gleich oder verschieden sein können,
n = 8 bis 40,
m = 2 bis 30 und
p = 1 bis 20.
wobei sich die Gew.-% auf die Summe der Festkörpergewichte der eingesetzten Monomeren und Polysiloxane beziehen,
wobei in den Bindemitteln die in der Formel I angegebenen Endgruppen weitgehend erhalten geblieben sind.

2. Bindemittel nach Anspruch 1, dadurch gekennzeichnet, daß im Polysiloxan der allgemeinen Formel I alle Reste R' gleich sind und die Bedeutung von Methylgruppen haben.

3. Bindemittel nach Anspruch 1 oder 2, dadurch gekennzeichnet, daß Alk in der allgemeinen Formel (I) eine Alkylengruppe mit 2 oder 3 Kohlenstoffatomen und Alk' eine Alkylengruppe mit 5 Kohlenstoffatomen ist.

4. Bindemittel nach Anspruch 1,2 oder 3, worin die Reste R gleich oder verschieden sein können und
- (CH₂)₃ - OH,
- (CH₂)₃ - (O CH₂ CH₂)₁₀ - OH 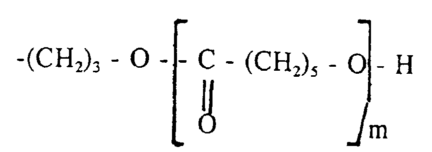
mit m = 2 bis 30, 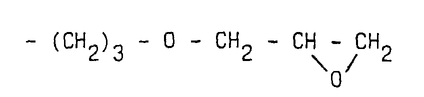 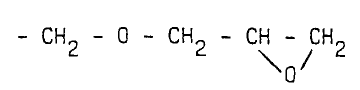 oder 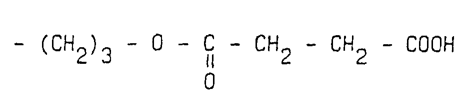 bedeuten, und
n = 8 bis 40.

5. Bindemittel nach einem der Ansprüche 1 bis 4, dadurch gekennzeichnet, daß die (Meth)acrylmonomeren Alkyl(meth)acrylate mit 1 bis 18 Kohlenstoffatomen im Alkylteil sind.

6. Bindemittel nach Anspruch 5, dadurch gekennzeichnet, daß zumindest ein Teil der Alkyl(meth)acrylate eine oder mehrere primäre oder sekundäre Hydroxyfunktionen oder eine Epoxyfunktion im Alkylteil aufweist.

7. Bindemittel nach Anspruch 6, dadurch gekennzeichnet, daß ein Teil der Alkyl(meth)acrylate eine Epoxyfunktion im Alkylteil aufweist und ein Teil der vorhandenen Glycidylfunktionen mit α,β-ungesättigten Carbonsäuren verestert ist.

8. Bindemittel nach einem der vorhergehenden Ansprüche, dadurch gekennzeichnet, daß zumindest ein Teil der (Meth)acrylmonomeren eine Carboxylgruppe aufweist und/oder daß bei der Herstellung der Bindemittel ein oder mehrere radikalisch copolymerisierbare Monomere mitverwendet wurden, die eine oder mehrere Carboxylgruppen aufweisen.

9. Verfahren zur Herstellung der Bindemittel nach einem der Ansprüche 1 bis 8 dadurch gekennzeichnet, daß man
3 bis 40 Gew.-% eines oder mehrerer α,ω-hydroxy-, carboxy- und/oder epoxyfunktioneller Polysiloxane, wie in einem der Ansprüche 1 bis 4 definiert, in flüssiger, gegebenenfalls in einem Lösemittel, gelöster Form, vorlegt und darin
97 bis 60 Gew.-% eines oder mehrerer (Meth)acrylmonomerer und gegebenenfalls zusätzlich eines oder mehrere davon unterschiedlicher, radikalisch polymerisierbarer Monomerer, wie in einem der Ansprüche 1 und 5 bis 7 definiert, in Anwesenheit eines Radikalinitiators polymerisiert, wobei sich die Gew.-% auf die Summe der Festkörpergehalte der eingesetzten Monomeren und der Polysiloxane beziehen.

10. Überzugsmittel zur Herstellung schmutzabweisender Überzüge, enthaltend ein oder mehrere Bindemittel gemäß einem der Ansprüche 1 bis 8, oder hergestellt nach dem Verfahren von Anspruch 9, neben einem oder mehreren Vernetzern und lacküblichen Additiven und gegebenenfalls Pigmenten und/oder Füllstoffen.

11. Überzugsmittel nach Anspruch 10, dadurch gekennzeichnet, daß es ein oder mehrere lackübliche Lösemittel enthält.

12. Überzugsmittel nach Anspruch 10, dadurch gekennzeichnet, daß es sich um ein wäßriges Überzugsmittel handelt, das ein oder mehrere organische Lösemittel enthalten kann.

13. Überzugsmittel nach einem der Ansprüche 10 bis 12, dadurch gekennzeichnet, daß die Bindemittel hydroxy- und/oder carboxyfunktionalisiert sind und als Vernetzer ein oder mehrere Polyisocyanate, die verkappt sein können und/oder Melaminharze, oder ein oder mehrere Polyepoxide enthalten sind.

14. Überzugsmittel nach einem der Ansprüche 10 bis 12, dadurch gekennzeichnet, daß die Bindemittel epoxyfunktionalisiert und zusätzlich gegebenenfalls hydroxyfunktionalisiert sind und als Vernetzer eine oder mehrere carboxyfunktionalisierte Verbindungen und gegebenenfalls ein oder mehrere Melaminharze oder ein oder mehrere Polyamine, die verkappt sein können, enthalten sind.

15. Überzugsmittel nach einem der Ansprüche 10 bis 12, dadurch gekennzeichnet, daß die Bindemittel epoxid- und acryloyl-funktionalisiert sind und als Vernetzer ein oder mehrere Polyamine, die verkappt sein können, eine oder mehrere Verbindungen mit mehreren CH-aciden Gruppen im Molekül oder ein oder mehrere Vernetzer mit mehreren umesterungsfähigen Gruppen pro Molekül enthalten sind.

16. Verwendung der Bindemittel nach einem der Ansprüche 1 bis 8, oder hergestellt nach dem Verfahren von Anspruch 9, zur Herstellung von Überzügen mit schmutzabweisenden Eigenschaften, insbesondere zur Herstellung von Antigraffiti-Schutzüberzügen.

## Claims

1. Binder vehicles which contain polysiloxanes, which are suitable for coating media, and which are obtainable by the radical-initiated polymerisation of
97 to 60 % by weight of one or more (meth)acrylic monomers and optionally, in addition, one or more monomers which are different therefrom and which can be polymerised by a radical mechanism, in the presence of
3 to 40 % by weight of one or more α,ω-hydroxy-, carboxy- and/or epoxy-functional polysiloxanes of general formula (I) 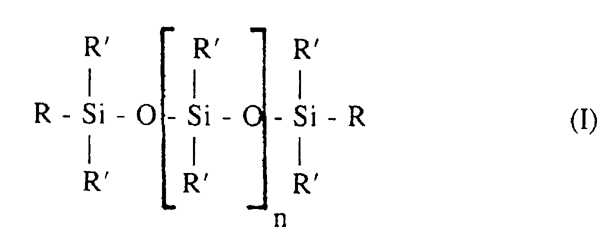
wherein the R' radicals may be the same or different and denote alkyl radicals containing 1 to 6 carbon atoms, and wherein the R radicals may be the same or different and denote
- Alk - OH
- Alk - (OAlk)ₚ - OH 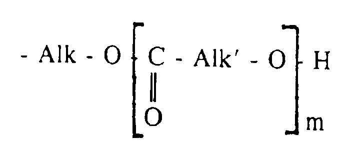 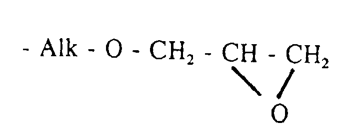
or 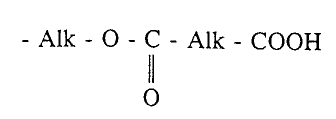 wherein Alk and Alk' are alkylene groups containing 1 to 6 carbon atoms and a plurality of alkylene groups contained in a molecule may be the same or different,
n = 8 to 40,
m = 2 to 30, and
p = 1 to 20,
wherein the percentages by weight are given with respect to the weights of solids of the monomers and polysiloxanes used,
and wherein the terminal groups given in formula I are substantially retained in the binder vehicles.

2. Binder vehicles according to claim 1, characterised in that in the polysiloxane of general formula I all the R' radicals are the same and represent methyl groups.

3. Binder vehicles according to claim 1 or 2, characterised in that in general formula (I) Alk is an alkylene group containing 2 or 3 carbon atoms and Alk' is an alkylene group containing 5 carbon atoms.

4. Binder vehicles according to claim 1, 2 or 3, wherein the R radicals may be the same or different and represent
- (CH₂)₃ - OH,
- (CH₂)₃ - (O-CH₂-CH₂)₁₀ - OH 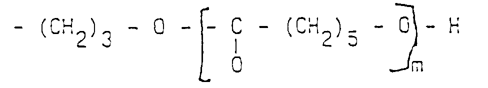
where m = 2 to 30, 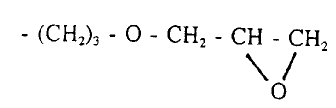 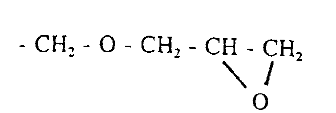 or 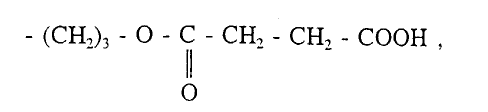 and
n = 8 to 40.

5. Binder vehicles according to any one of claims 1 to 4, characterised in that the (meth)acrylic monomers are alkyl (meth)acrylates containing 1 to 18 carbon atoms in their alkyl component.

6. Binder vehicles according to claim 5, characterised in that at least part of the alkyl (meth)acrylates contains one or more primary or secondary hydroxy functions or an epoxy function in the alkyl component.

7. Binder vehicles according to claim 6, characterised in that part of the alkyl (meth)acrylates contains an epoxy function in the alkyl component, and part of the existing glycidyl functions is esterified with α,β-unsaturated carboxylic acids.

8. Binder vehicles according to any one of the preceding claims, characterised in that at least part of the (meth)acrylic monomers contains a carboxyl group and/or that during the production of the binder vehicles one or more monomers which can be copolymerised by a radical mechanism and which contain one or more carboxyl groups were used in conjunction.

9. A method of producing the binder vehicles according to any one of claims 1 to 8, characterised in that
3 to 40 % by weight of one or more α,ω-hydroxy-, carboxy- and/or epoxy-functional polysiloxanes as defined in any one of claims 1 to 4 are placed in the reaction vessel in liquid form, optionally dissolved in a solvent, and
97 to 60 % by weight of one or more (meth)acrylic monomers and optionally, in addition, one or more monomers which are different therefrom and which can be polymerised by a radical mechanism, as defined in any one of claims 1 to 5 and claim 7, are polymerised therein in the presence of a radical initiator, wherein the percentages by weight are given with respect to the sum of the solids contents of the monomers and polysiloxanes used.

10. A coating medium for the production of foreign matter-repellent coatings, containing one or more binder vehicles according to any one of claims 1 to 8 or produced by the method of claim 9, in addition to one or more crosslinking agents and customary lacquer additives and optionally pigments and/or extenders.

11. A coating medium according to claim 10, characterised in that it contains one or more customary lacquer solvents.

12. A coating medium according to claim 10, characterised in that it is an aqueous coating medium which may contain one or more organic solvents.

13. A coating medium according to any one of claims 10 to 12, characterised in that the binder vehicles are hydroxy- and/or carboxy-functionalised, and one or more polyisocyanates, which may be capped, and/or melamine resins, or one or more polyepoxides, are contained as crosslinking agents.

14. A coating medium according to any one of claims 10 to 12, characterised in that the binder vehicles are epoxy-functionalised and are optionally hydroxy-functionalised in addition, and one or more carboxy-functionalised compounds and optionally one or more melamine resins or one or more polyamines, which may be capped, are contained as crosslinking agents.

15. A coating medium according to any one of claims 10 to 12, characterised in that the binder vehicles are epoxy- and acryloyl-functionalised, and one or more polyamines, which may be capped, one or more compounds containing a plurality of acidic CH groups in their molecule or one or more crosslinking agents containing a plurality of groups which are capable of transesterification per molecule are contained as crosslinking agents.

16. The use of the binder vehicles according to any one of claims 1 to 8 or produced by the method of claim 9 for the production of coatings with foreign matter-repellent properties, particularly for the production of anti-graffiti protective coatings.

## Revendications

1. Liants contenant des polysiloxanes appropriés comme agents de revêtement, que l'on peut obtenir par polymérisation initiée par voie radicalaire de
97 à 60% en poids d'un ou plusieurs monomères (méth)acrylate, et le cas échéant en plus, d'un ou plusieurs monomères qui en diffèrent, et qui sont polymérisables par voie radicalaire, en présence de
3 à 40% en poids d'un ou plusieurs polysiloxanes à fonction α,ω-hydroxy, -carboxy et/ou à fonction époxy, de formule générale (I) 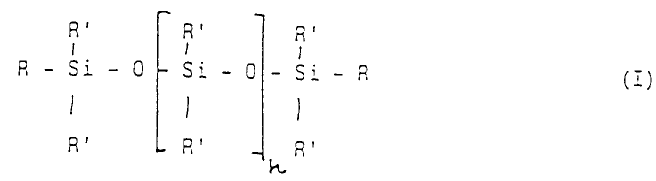 où les restes R' peuvent être identiques ou différents et représentent des restes alkyle de 1 a 6 atomes de carbone, et où les restes R peuvent être identiques ou différents et représentent
-Alk - OH
-Alk - (OAlk)ₚ - OH 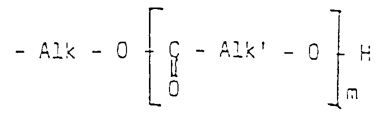 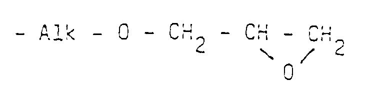 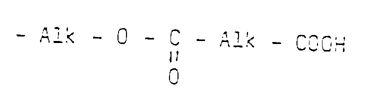
où Alk et Alk' sont des groupes alkylène de 1 à 6 atomes de carbone et plusieurs groupes alkylène présents dans une molécule peuvent être identiques ou différents,
n = 8 à 40,
m = 2 à 30, et
p = 1 à 20,
où les pourcentages en poids se rapportent à la somme des poids de corps solides des monomères utilisés et des polysiloxanes,
où les groupes terminaux dans les agents liants indiqués à la formule I restent largement conservés.

2. Liants selon la revendication 1, caractérisés en ce que dans le polysiloxane de formule générale I, tous les restes R' sont identiques et représentent des groupes méthyle.

3. Liants selon la revendication 1 ou 2, caractérisés en ce que Alk dans la formule générale I représente un groupe alkylène avec 2 ou 3 atomes de carbone, et Alk' est un groupe alkylène ce 5 atomes de carbone.

4. Liants selon la revendication 1, 2 ou 3, où les restes R peuvent être identiques ou différents et représentent
- (CH₂)₃ - OH,
- (CH₂)₃ - (O CH₂ CH₂)₁₀ - OH 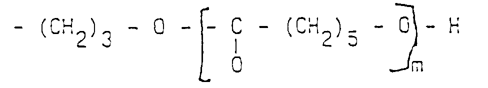
avec m = 2 à 30, 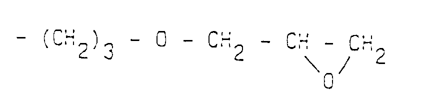 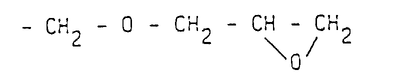 ou 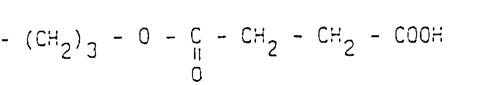 et
n = 8 à 40.

5. Liants selon l'une des revendications 1 à 4, caractérisés en ce que les monomères (méth)acrylate sont des (méth)acrylates d'alkyle avec 1 à 18 atomes de carbone dans la partie alkyle.

6. Liants selon la revendication 5, caractérisés en ce qu'au moins une partie des (méth)acrylates d'alkyle présentent une ou plusieurs fonctions hydroxy primaires ou secondaires ou une fonction époxy dans la partie alkyle.

7. Liants selon la revendication 6, caractérisés en ce qu'une partie des méthacrylates d'alkyle présente une fonction époxy dans la partie alkyle et qu'une partie des fonctions glycidyles présentes est estéréfiée par des acides carboxyliques α,β-insaturés.

8. Liants selon l'une des revendications précédentes, caractérisés en ce qu'au moins une partie des monomères (méth)acrylate présente un groupe carboxy et/ou que lors de la préparation des liants, on utilise en même temps un ou plusieurs monomères copolymérisables par voie radicalaire, qui présentent un ou plusieurs groupes carboxy.

9. Procédé de préparation des liants selon l'une des revendications 1 à 8, caractérisé en ce qu'on place
3 à 40% en poids d'un ou plusieurs polysiloxanes à fonction α,ω-hydroxy, carboxy- et/ou à fonction époxy, comme c'est défini dans l'une des revendications 1 à 4, sous forme liquide, le cas échéant dissous dans un solvant, et on y polymérise
97 à 60% en poids d'un ou plusieurs monomères (méth)acrylate et le cas échéant en plus un ou plusieurs monomères qui en sont différents polymérisables par voie radicalaire, comme c'est défini dans l'une des revendications 1 et 5 à 7, en présence d'un initiateur de radicaux, où les pourcentages en poids se rapportent à la somme des teneurs en corps solides des monomères et des polysiloxanes mis en oeuvre.

10. Agents de revêtement pour produire des revêtements repoussant la salissure, contenant un ou plusieurs liants selon l'une des revendications 1 à 8, ou préparés selon le procédé de la revendication 9, avec un ou plusieurs durcisseurs et additifs usuels en peinture, et le cas échéant des pigments et/ou des charges.

11. Agent de revêtement selon la revendication 10, caractérisé en ce qu'il contient un ou plusieurs solvants usuels en peinture.

12. Agent de revêtement selon la revendication 10, caractérisé en ce qu'il s'agit d'un agent de revêtement aqueux, qui peut comprendre un ou plusieurs solvants organiques.

13. Agent de revêtement selon l'une des revendications 10 à 12, caractérisé en ce que les liants ont des fonctions hydroxy et/ou carboxy et contiennent comme durcisseurs un ou plusieurs polyisocyanates, qui peuvent être bloqués et/ou des résines laie, ou un ou plusieurs polyépoxydes.

14. Agent de revêtement selon l'une des revendications 10 à 12, caractérisé en ce que les liants ont des fonctions époxy et en plus le cas échéant des fonctions hydroxy, et qu'ils contiennent comme durcisseurs un ou plusieurs composés à fonction carboxy et le cas échéant une ou plusieurs résines mélamine ou une ou plusieurs polyamines, qui peuvent être bloquées.

15. Agent de revêtement selon l'une des revendications 10 à 12, caractérisé en ce que les liants ont des fonctions époxyde et acryloyle et qu'ils contiennent comme durcisseurs une ou plusieurs polyamines, qui peuvent être bloquées, un ou plusieurs autres composés ayant plusieurs groupes CH acides dans la molécule ou un ou plusieurs durcisseurs, avec plusieurs groupes qu'on peut transestérifier par molécule.

16. Utilisation de liants selon l'une des revendications 1 à 8, ou que l'on prépare selon le procédé de la revendication 9, pour produire des revêtements ayant des propriétés repoussant la salissure, notamment pour produire des revêtements protecteurs anti-graffitis.
